# EUROPEAN PATENT APPLICATION

(11) **EP 2 523 461 A1**
(43) Date of publication of application: **14.11.2012**
(21) Application number: 10842141.3
(22) Date of filing: 11.11.2010
(51) Int. Cl.: H04N 13/00, G11B 27/00, H04N 5/91, H04N 7/26

(54) **IMAGE PROCESSING DEVICE, INFORMATION RECORDING MEDIUM, IMAGE PROCESSING METHOD, AND PROGRAM**

(30) Priority: 08.01.2010 JP 2010003275
(71) Applicant: Sony Corporation, Tokyo 108-0075 (JP)
(72) Inventor: KATSUMATA, Mitsuru, Tokyo 108-0075 (JP); HIRABAYASHI, Mitsuhiro, Tokyo 108-0075 (JP)
(74) Representative: Ealey, Douglas Ralph
(86) International application number: PCT/JP2010/070105
(87) International publication number: WO 2011/083626

(57) **Abstract**

Provided is a configuration to make it possible to obtain information required for a data process on stored data of an MP4 file from the management information of the MP4 file. It is configured to hierarchically arrange and record information to be applied to various data processes to be executed in a playback process of the data stored in the MP4 file, for example, various data processes in different categories, such as a three-dimensional image display process and a decoding process of encrypted data, in the management information of the MP4 file. This configuration makes it possible to securely obtain, from the management information of the MP4 file, various information required for each of the data processes in different categories, which are necessary to be executed in the playback of the data stored in the MP4 file, for example, a display process of encrypted three-dimensional image data, and a smooth data playback process becomes possible.

## Description

### TECHNICAL FIELD

The present invention relates to an image processing device, an information recording medium, an image processing method, and a program, and more particularly, relates to an image processing device, an information recording medium, an image processing method, and a program, for recording and playing back an image for the display of a three-dimensional image (3D image).

### BACKGROUND ART

In order to generate a stereoscopic image, what is called a three-dimensional image (also called a 3D image or stereo image), images shot from different points of view, in other words, an image for the left eye and an image for the right eye are required. A three-dimensional image can be displayed by using these images shot from the different points of view.

Methods for displaying a three-dimensional image (3D image) include various methods. For example, there is a display method in compliance with the passive glasses system that separates images to be observed by the left and right eyes with polarizing filters and color filters, a display method in compliance with the active glasses system that alternately opens and closes the left and right liquid crystal shutters and temporally separates images to be observed alternately for the left and right eyes, or the like. In any display method, an image for the left eye and an image for the right eye are used.

Not only a three-dimensional image (3D image), but also image data such as still images and video, which are shot by a camera, are encoded in accordance with various encoding (compression) formats upon a recording process on a medium or upon data transmission. In other words, data are reduced in amount to be recorded or transmitted.

There are various standards for encoding formats such as JPEG that specifies a still image encoding format and MPEG that is an encoding format mainly targeting video. For example, an example of a format used for a process of recording a three-dimensional still image is described in Fig. 10 of Patent Document 1 (JP-A-2004-334833).

High definition images such as HD (High Definition) images have increasingly been used these days, and an encoding method having a high compression rate is used. There is the MP4 file format (ISO/IEC 14496-14) (hereinafter referred to as MP4) as a method of these storage file formats of the encoded data.
MP4 is a storage file format of compressed video data in MPEG (Moving Picture Experts Group) 4 format. MP4 is a standard specified in ISO/IEC 14496. MP4 is a format that can store not only video in MPEG-4 format but also images and audio data in various formats, such as video in MPEG-2 and MPEG-1, audio such as in AAC and MP3, and still images such as in JPEG and PNG.

In this manner, encoded data in various formats can be stored in an MP4 file, and an area to record management information on the format and type of encoded data stored in an MP4 file is set in MP4. If a decoding process is performed on the encoded data, an examination process is executed on the management information in the MP4 file.

However, there is a problem in that the management information specification of the current MP4 format does not specify an area to store information for identifying whether an image stored in an MP4 file is a three-dimensional (3D) image or a two-dimensional (2D) image.

A device that reads an MP4 file from a recording medium and plays it back or a device that receives an MP4 file via communication means and plays it back cannot identify whether the stored image is a three-dimensional (3D) image or two-dimensional (2D) image from the management information of the MP4 file. Therefore, unless the image is actually obtained and analyzed or played back, it is not possible to grasp whether or not the image is three-dimensional image data or two-dimensional image data. As a result, there arises, for example, a situation where three-dimensional image data are wrongly displayed on a display device that does not have the function of displaying a three-dimensional image.

Moreover, as described above, methods for displaying a three-dimensional image include various methods; however, many of the playback devices and display devices have a configuration that can play back or display images compatible with only a part of the methods. Therefore, it is not even possible to examine whether or not the image is a three-dimensional image that can be played back or displayed on the device itself, only with the management information in accordance with the current MP4 format.
In other words, there is a problem in that it is not possible to examine whether an image is data that can be processed by the device itself, only with the management information of the current MP4 file, unless a data configuration is examined by obtaining the image data or a playback or display process is actually executed.

### CITATION LIST

### PATENT DOCUMENT

Patent Document 1: JP-A-2004-334833

### SUMMARY OF THE INVENTION

### PROBLEMS TO BE SOLVED BY THE INVENTION

The present invention has been made, for example, considering the above problem, and records three-dimensional image management information on whether or not image data stored in an MP4 file include a three-dimensional image or the format of the three-dimensional image, and the like, in the management information of a file compatible with the MP4 format. An object of the present invention is to provide an image processing device, an information recording medium, an image processing method, and a program, which prevent wrong playback and display processes and enable the execution of a right playback process by the configuration enabling a playback device and a display device to grasp whether stored data are a three-dimensional image or a two-dimensional image prior to obtaining actual data from an MP4 file and, further, examine the format of the three-dimensional image and the like.

Moreover, an object of the present invention is to provide an image processing device, an information recording medium, an image processing method, and a program, which can securely provide information required for data processes by hierarchically arranging and recording, in the management information of an MP4 file, information to be applied to various data processes to be executed in a playback process of data stored in the MP4 file, for example, various data processes in different categories, such as a decoding process of encrypted data in addition to the above three-dimensional image display process.

### SOLUTIONS TO PROBLEMS

A first aspect of the present invention is an image processing device including:
an encoding unit for executing an encoding process of image data; and
a file generation unit for generating an encoded data storage file including encoded data generated by the encoding unit and management information of the encoded data, and
the file generation unit generates data configuration information where information to be applied to a data process upon a playback process of the encoded data is set by unit of category of the data process, and generates a file where a plurality of pieces of the data configuration information by unit of category is hierarchically arranged and is recorded in the management information.

Furthermore, in an embodiment of the image processing device of the present invention, at least one piece of the data configuration information by unit of category is three-dimensional image management information that makes it possible to distinguish whether or not the stored image data of the file generated by the file generation unit include three-dimensional image data.

Furthermore, in an embodiment of the image processing device of the present invention, at least one piece of the data configuration information by unit of category is three-dimensional image management information that makes it possible to distinguish a three-dimensional image recording format of three-dimensional image data included in the stored image data of the file generated by the file generation unit.

Furthermore, in an embodiment of the image processing device of the present invention, at least one piece of the data configuration information by unit of category is three-dimensional image management information that makes it possible to distinguish the three-dimensional image recording format with which the three-dimensional image data included in the stored image data of the file generated by the file generation unit comply, among the formats of:
(a) a frame sequential format;
(b) a side by side format; and
(c) a top and bottom format.

Furthermore, in an embodiment of the image processing device of the present invention, at least one piece of the data configuration information by unit of category is encryption format information of the stored image data of the file generated by the file generation unit, and the file generation unit generates a file where first data configuration information including the encryption format information and second data configuration information including the three-dimensional image management information are hierarchically arranged and are recorded in the management information.

Furthermore, in an embodiment of the image processing device of the present invention, the file generation unit has a configuration of executing the generation of an MP4 file, and generates a file where the data configuration information is hierarchically arranged and recorded in the level below an AV codec box of the MP4 file.

Furthermore, in an embodiment of the image processing device of the present invention, the file generation unit generates a file where a scheme information box including the data configuration information is hierarchically arranged and recorded in the level below the AV codec box of the MP4 file.

Furthermore, in an embodiment of the image processing device of the present invention, the file generation unit executes processes of setting and recording the scheme information box by unit of partitioned data by unit of track or sample being partitioned data of image data to be stored in the MP4 file.

Furthermore, a second aspect of the present invention is an image processing device including:
a file analysis unit for analyzing an encoded data storage file including encoded data of image data and management information of the encoded data; and
a data processing unit for executing a plurality of data processes in different categories upon a playback process of the image data stored in the file, and
the management information of the file has a configuration of hierarchically arranging and recording data configuration information necessary to execute the process by unit of category of the data process,
the file analysis unit obtains the hierarchically arranged data configuration information of the management information of the file, and
the data processing unit applies the data configuration information obtained by the file analysis unit and executes the plurality of data processes in different categories.

Furthermore, in an embodiment of the image processing device of the present invention, at least one piece of the data configuration information by unit of category is three-dimensional image management information that makes it possible to distinguish whether the stored image data of the file include three-dimensional image data.

Furthermore, in an embodiment of the image processing device of the present invention, at least one piece of the data configuration information by unit of category is three-dimensional image management information that makes it possible to distinguish a three-dimensional image recording format of three-dimensional image data included in the stored image data of the file.

Furthermore, in an embodiment of the image processing device of the present invention, at least one piece of the data configuration information by unit of category is three-dimensional image management information that makes it possible to distinguish the three-dimensional image recording format with which the three-dimensional image data included in the stored image data of the file comply, among the formats of:
(a) a frame sequential format;
(b) a side by side format; and
(c) a top and bottom format.

Furthermore, in an embodiment of the image processing device of the present invention, at least one piece of the data configuration information by unit of category is encryption format information of the stored image data of the file generated by the file generation unit, and the file analysis unit obtains, from the management information, first data configuration information including the encryption format information and second data configuration information including the three-dimensional image management information.

Furthermore, in an embodiment of the image processing device of the present invention, the file is an MP4 file, and the file analysis unit obtains the data configuration information by unit of category of the data process from a scheme information box hierarchically arranged and recorded in the level below an AV codec box of the MP4 file.

Furthermore, in an embodiment of the image processing device of the present invention, the file analysis unit obtains the scheme information box by unit of partitioned data by unit of track or sample being partitioned data of the image data stored in the MP4 file.

Furthermore, a third aspect of the present invention is an information recording medium where an MP4 file including encoded data of image data and management information of the encoded data is recorded, and
the management information has a configuration of hierarchically arranging and recording data configuration information where information to be applied to a data process upon a playback process of the encoded data is set by unit of category of the data process, and
in a device for reading and playing back an MP4 file, the hierarchically arranged data configuration information is sequentially obtained, and the execution of a plurality of data processes in different categories is enabled by applying the obtained data configuration information.

Furthermore, a fourth aspect of the present invention is an image processing method to be executed in an image processing device, including:
an encoding process step of an encoding unit executing an encoding process of image data; and
a file generation step of a file generation unit generating an encoded data storage file including encoded data generated by the encoding unit and management information of the encoded data, and
the file generation step includes the step of generating data configuration information where information to be applied to a data process upon a playback process of the encoded data is set by unit of category of the data process, and generating a file where a plurality of pieces of the data configuration information by unit of category is hierarchically arranged and is recorded in the management information.

Furthermore, a fifth aspect of the present invention is an image processing method to be executed in an image processing device, including:
a file analysis step of a file analysis unit analyzing an encoded data storage file including encoded data of image data and management information of the encoded data; and
a data processing step of a data processing unit executing a plurality of data processes in different categories upon a playback process of the image data stored in the file, and
the management information of the file has a configuration of hierarchically arranging and recording data configuration information necessary to execute the process by unit of category of the data process,
the file analysis step includes the step of obtaining hierarchically arranged data configuration information of the management information of the file, and
the data processing step includes the step of applying the data configuration information obtained by the file analysis unit to execute the plurality of data processes in different categories.

Furthermore, a sixth aspect of the present invention is a program for causing an image processing device to execute an image process, including:
an encoding process step of causing an encoding unit to execute an encoding process of image data; and
a file generation step of causing a file generation unit to generate an encoded data storage file including encoded data generated by the encoding unit and management information of the encoded data, and
the file generation step includes the step of generating data configuration information where information to be applied to a data process upon a playback process of the encoded data is set by unit of category of the data process, and generating a file where a plurality of pieces of the data configuration information by unit of category is hierarchically arranged and recorded in the management information.

Furthermore, a seventh aspect of the present invention is a program for causing an image processing device to execute an image process, including:
a file analysis step of causing a file analysis unit to analyze an encoded data storage file including encoded data of image data and management information of the encoded data; and
a data processing step of causing a data processing unit to execute a plurality of data processes in different categories upon a playback process of the image data stored in the file, and
the management information of the file has a configuration of hierarchically arranging and recording data configuration information necessary to execute the process by unit of category of the data process,
the file analysis step includes the step of obtaining the hierarchically arranged data configuration information of the management information of the file, and
the data processing step includes the step of applying the data configuration information obtained by the file analysis unit to execute the plurality of data processes in different categories.

The program of the present invention can be provided by a recording medium and communication medium provided in computer readable format, to an information processing device and a computer system, which can execute various program codes, for example. Such a program is provided in computer readable format; accordingly, processes in accordance with the program are realized on an information processing device and a computer system.

Still other objects, characteristics and advantages of the present invention will be disclosed with more detailed descriptions based on embodiments of the present invention and the accompanied drawings, which will be described later. The system in the specification indicates a logical aggregate configuration of a plurality of devices, and is not limited to one where a device having each configuration is in the same housing.

### EFFECTS OF THE INVENTION

According to the configuration of an embodiment of the present invention, it is configured to hierarchically arrange and record, in the management information of the MP4 file, information to be applied to various data processes to be executed in a playback process of data stored in an MP4 file, for example, various data processes in different categories such as a three-dimensional image display process and a decoding process of encrypted data. This configuration makes it possible to securely obtain, from the management information of the MP4 file, various information required for each of the data processes in different categories, which need to be executed for the playback of the data stored in the MP4 file, for example, a display process of encrypted three-dimensional image data, and a smooth data playback process becomes possible.

### BRIEF DESCRIPTION OF DRAWINGS

Fig. 1 is a view explaining the basic configuration of the MP4 file format.
Fig. 2 is a view explaining an embodiment of recording three-dimensional image identification information in a profile box (uuid (PROF)) of an MP4 file.
Fig. 3 is a view explaining a specific flag setting example of the three-dimensional image identification information to be recorded in the profile box (uuid (PROF)) of the MP4 file.
Fig. 4 is a view explaining an embodiment of recording the three-dimensional image identification information in an AV codec box (avc1) of the MP4 file.
Fig. 5 is a view explaining methods of data decoding and playback processes in accordance with the frame sequential (FS) format.
Fig. 6 is a view explaining methods of data decoding and playback processes in accordance with the side by side (SbS) format.
Fig. 7 is a view explaining methods of data decoding and playback processes in accordance with the top and bottom (T&B) format.
Fig. 8 is a view explaining a data setting example of frame configuration information as detailed three-dimensional image information to be recorded in a stereo video information box to be set in the AV codec box.
Fig. 9 is a view explaining a data setting example of the frame configuration information as the detailed three-dimensional image information to be recorded in the stereo video information box to be set in the AV codec box.
Fig. 10 is a view explaining an embodiment of recording the three-dimensional image identification information by use of a scheme information box (sinf) to be specified as an extended configuration of the AV codec box of the MP4 file.
Fig. 11 is a view explaining the embodiment of recording the three-dimensional image identification information by use of the scheme information box (sinf) to be specified as the extended configuration of the AV codec box of the MP4 file.
Fig. 12 is a view illustrating a flowchart explaining a recording process sequence of image data, which is executed by an image processing device of the present invention.
Fig. 13 is a view illustrating a flowchart explaining a playback process sequence of image data, which is executed by the image processing device of the present invention.
Fig. 14 is a view explaining a configuration example of the image processing device of the present invention.

### MODE FOR CARRYING OUT THE INVENTION

An image processing device, an information recording medium, an image processing method, and a program of the present invention will be described below with reference to the drawings. The description will be given in the following order of items:
1. The basic configuration of the MP4 file format,
2. A configuration to record three-dimensional image management information in the management information of an MP4 file,
   2A. (1) Embodiment of recording three-dimensional image identification information in a profile box (uuid (PROF)) (first embodiment),
   2B. (2) Embodiment of recording detailed three-dimensional image information in an AV codec box (avc1) (second embodiment)
   2C. (3) Embodiment of recording the detailed three-dimensional image information by use of a scheme information box (sinf) to be specified as an extended configuration of the AV codec box (avc1) (third embodiment),
3. An image process sequence to be executed by an information processing device, and
4. A configuration example of an information processing device of the present invention.

### [1. The basic configuration of the MP4 file format]

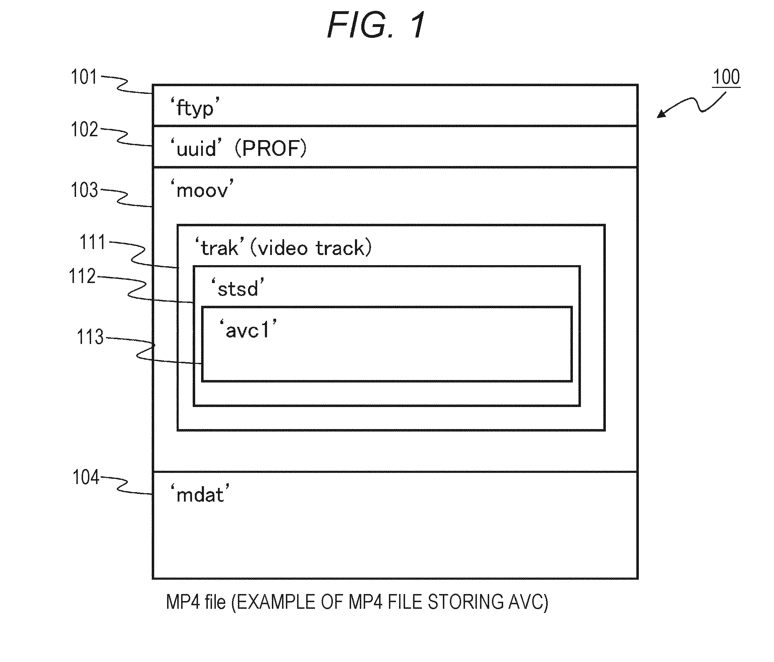

First, the basic configuration of the current MP4 file format will be described with reference to Fig. 1. As described above, MP4 is a storage file format of encoded data in MPEG (Moving Picture Experts Group) 4 format, and is specified in ISO/IEC14496. MP4 has a configuration that can store not only video in MPEG-4 format but also images and audio data in various formats, such as video in MPEG-2 and MPEG-1, audio such as in AAC and MP3, and still images such as in JPEG and PNG.

The MP4 file format specified in ISO/IEC14496 has an object-oriented data structure. Each object is called a box. Fig. 1 is a view illustrating a configuration example of an MP4 file 100 in which general AV (Audio Video) data including images and audio data are stored. The MP4 file 100 has the following boxes as shown in Fig. 1:
(1) a file type box (ftyp) 101,
(2) a profile box (uuid (PROF)) 102,
(3) a movie box (moov) 103, and
(4) an actual data box (mdat) 104.
These boxes are included.

(1) Record information on a file type is included in the file type box (ftyp) 101.
(2) File information such as a frame rate is recorded in the profile box (uuid (PROF)) 102.
(3) Management information (metadata) of the stored data is recorded in the movie box (moov) 103.
(4) Actual data such as encoded (compressed) images and audio data are recorded in the actual data box (mdat) 104.

The image data and audio data, which are to be actually played back, are stored in (4) the actual data box (mdat) 104. The information of (1) to (3), in other words, management information such as index information and attribute information of actual data is stored in these boxes of the file type box (ftyp) 101, (2) the profile box (uuid (PROF)) 102, and (3) the movie box (moov) 103. The attribute information includes information to be applied to a decoding process (decompression process) of the actual data stored in the actual data box (mdat) 104. Moreover, if the actual data are encrypted, information to be applied for a decoding process thereof, and the like are also recorded.

The management data (metadata) are recorded by unit of track being the partitioned data of the actual data stored in the actual data box (mdat) 104 in the movie box (moov) 103.
The track includes a video track for image data and an audio track for audio data. It is also possible to set a first audio track for Japanese, a second audio track for English, and so on. Moreover, it is also possible to set fragmented tracks such as a first video track and a second video track, each of which is for a different image.

The movie box (moov) 103 shown in Fig. 1 shows only one track box 111 in which the metadata of one track (video track) are stored; however, this shows a typical example of a track box. In reality, a box or boxes in the same format as that of the track box 111 shown in Fig. 1 are stored in the movie box (moov) 103 in accordance with the number of tracks.

The metadata for data by unit of track set as a partitioned area of the actual data are recorded in the track box 111.
Stored in the track box 111 are a sample description box (stsd) 112 and, further, an AV codec box (avc1) 113 in the level below it.

An area that is a further partitioned track is a sample, and one track is set with one or more samples.
In other words, the actual data are configured of one or more tracks, and one track is further configured of one or more samples.

Fig. 1 illustrates one sample description box (stsd) 112 in the track box 111. There always exists one sample description box (stsd) in the track box.

A box in the level below the sample description box (stsd) 112 is the AV codec box (avc1) 113, and the detailed codec information of the actual data corresponding to a sample, in other words, detailed information required for a decoding playback process of a sample being a component of the actual data (codec information) is recorded in the AV codec box (avc1) 113. It is possible to record, in the AV codec box (avc1) 113, not only information related to a decoding process of MP4 but also, for example, information related to an encryption format.

A device that reads an MP4 file from a medium such as a DVD and plays it back, or a device that receives an MP4 file via communication means and plays it back reads the management information of an MP4 file having the configuration shown in Fig. 1, in other words, the management information stored in at least any of the file type box (ftyp) 101, the profile box (uuid (PROF)), and the movie box (moov) 103, and examines the details of the actual data stored in the actual data box (mdat) 104. Detailed codec information is obtained by unit of track and sample by the process of examining the management information to execute a decoding process in accordance with the information. Such processes make it possible to perform a decoding and a playback process on the MP4 data.

However, as described above, the management information of the current MP4 format does not specify the area to record information to identify whether an image stored in the MP4 file is a three-dimensional (3D) image or two-dimensional (2D) image.

Therefore, a device that reads an MP4 file from a recording medium and plays it back or a device that receives an MP4 file via communication means and plays it back cannot grasp whether the stored data of the MP4 file are three-dimensional image data or two-dimensional image data unless actually obtaining and analyzing or playing back the image. As a result, there arises, for example, a situation where three-dimensional image data are wrongly displayed on a display device that does not have the function of displaying a three-dimensional image. Moreover, as described above, it is not also possible to examine whether the stored data are a three-dimensional image that can be played back or displayed by the device itself, only with the current management information.

If the current MP4 format is used in this manner, when an image stored in an MP4 file is a three-dimensional image, there is a problem in that it is not possible to examine whether or not the data can be processed by the device itself unless the image data are actually obtained from the actual data box (mdat) 104 for the examination of the data configuration, or the image data are actually played back or displayed.

### [2. A configuration to record three-dimensional image management information in the management information of an MP4 file]

A plurality of embodiments of recording the management information of a three-dimensional image in the management information of an MP4 file will be described below as a configuration to solve the above problem.
Three embodiments shown below are sequentially described:
(1) Embodiment of recording three-dimensional image identification information in a profile box (uuid (PROF)) (first embodiment),
(2) Embodiment of recording three-dimensional image identification information in an AV codec box (avc1) (second embodiment), and
(3) Embodiment of recording three-dimensional image identification information by use of a scheme information box (sinf) to be specified as an extended configuration of the AV codec box (avc1) (third embodiment).
Each of these embodiments can be implemented as a single configuration; however, a configuration to use a plurality of embodiments in combination is also possible.

### [2A. (1) Embodiment of recording three-dimensional image identification information in a profile box (uuid (PROF)) (first embodiment)]

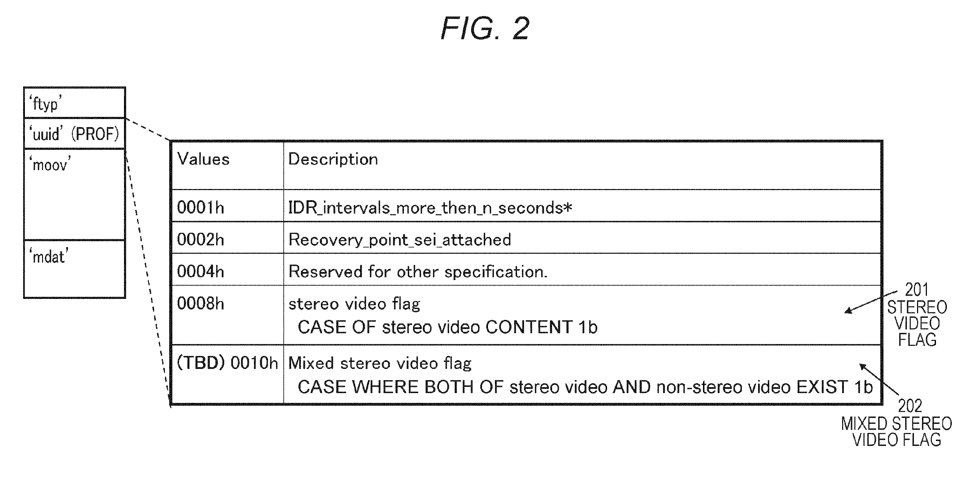

First, an embodiment of recording three-dimensional image identification information in a profile box (uuid (PROF)) will be described with reference to Fig. 2.

Fig. 2 is a view illustrating a configuration of the high-order 16 bits (0001h to 0010h) of a video management flag (video_attribute_flag) included in a profile box (uuid (PROF)) proposed in the embodiment. (h) denotes a hexadecimal expression.

Data of the first half (0001h to 0004h) of the high-order 16 bits of the video management flag (video_attribute_flag) shown in Fig. 2 are fields already specified in the conventional MP4 and, for example, are specified as the following data areas:
0001h: IDR (Instantaneous Decoder Refresh) frame interval information, and
0002h: Information on the presence or absence of a recovery point SEI message.
They are information to be applied to the decoding of MP4.
0004h or later is a reserved area.

In the embodiment, information on whether or not the image data stored in the actual data box (mdat) (refer to Fig. 1) of the MP4 file include a three-dimensional image is stored in the latter half of the high-order 16 bits (0001h to 0010h) of the video management flag (video_attribute_flag).

Specifically, the following three-dimensional image identification information is stored as shown in Fig. 2:
0008h: a stereo video flag 201, and
0010h: a mixed stereo video flag 202.
Each of these flags is set as three-dimensional image identification information.

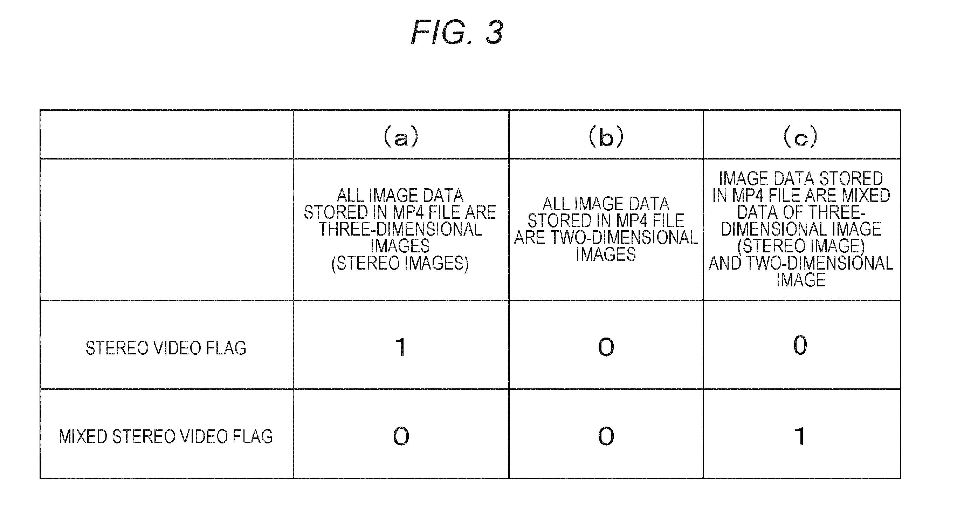

Specific contents of the values of the flags will be described with reference to Fig. 3.
There are three patterns as formats of image data stored in the MP4 file, as shown in Fig. 3.
(a) All image data stored in the MP4 file are a three-dimensional image (stereo images).
(b) All image data stored in the MP4 file are two-dimensional images.
(c) Image data stored in the MP4 file are mixed data of a three-dimensional image (stereo image) and a two-dimensional image.
The patterns are the above three.

If all image data stored in the MP4 file include a three-dimensional image, a bit value = 1 is set and if not, a bit value = 0 for the stereo video flag 201.
Therefore, a bit value = 1 only in the case of (a) shown in Fig. 3:
(a) All image data stored in the MP4 file are three-dimensional images (stereo images).
Moreover, a bit value = 0 in the cases of (b) and (c):
(b) All image data stored in the MP4 file are two-dimensional images.
(c) Image data stored in the MP4 file are mixed data of a three-dimensional image (stereo image) and a two-dimensional image.

On the other hand, if image data stored in the MP4 file are mixed data of a three-dimensional image and a two-dimensional image, a bit value = 1 is set for the mixed video flag 202, otherwise a bit value = 0 is set. Therefore, a bit value = 1 only in the case of (c) shown in Fig. 3:
(c) Image data stored in the MP4 file are mixed data of a three-dimensional image (stereo image) and a two-dimensional image.
Moreover, a bit value = 0 in the cases of (a) and (b):
(a) All image data stored in the MP4 file are three-dimensional images (stereo images).
(b) All image data stored in the MP4 file are two-dimensional images.

These flag settings enable the following data identification:

### (Case 1)

Stereo video flag = 1, mixed stereo video flag = 0,
In this case, it is judged that
(a) All image data stored in the MP4 file are three-dimensional images (stereo images).

### (Case 2)

Stereo video flag = 0, mixed stereo video flag = 0,
In this case, it is judged that
(b) All image data stored in the MP4 file are two-dimensional images.

### (Case 3)

Stereo video flag = 0, mixed stereo video flag = 1,
In this case, it is judged that
(c) Image data stored in the MP4 file are mixed data of a three-dimensional image (stereo image) and a two-dimensional image.

In this manner, the configuration of this embodiment makes it possible to obtain the three-dimensional image information of image data stored in the MP4 file only by examining the flag settings of the stereo video flag 201 and the mixed stereo video flag 202, which are provided to the video management flag (video_attribute_flag) of the profile box (uuid (PROF)) of the MP4 file. Specifically, image data stored in the MP4 file can be examined on the type between the following types of:
(Type a) including only three-dimensional images,
(Type b) including only two-dimensional images, and
(Type c) being mixed data of a three-dimensional image and a two-dimensional image.
It becomes possible to distinguish these types.

The setting example of the bit values shown in Fig. 3 is an example, the opposite settings of the bit values may be performed, and various settings where bit values are set such that each of the above types can be distinguished are possible.

A device that reads an MP4 file from a recording medium and plays it back or a device that receives an MP4 file via communication means and plays it back can obtain the three-dimensional image information of the stored data of the MP4 file by examining the flag settings of the stereo video flag 201 and the mixed stereo video flag 202, which are set in the profile box (uuid (PROF)), prior to actually obtaining the image from the actual data box (mdat) of the MP4 file. Therefore, it is possible to prevent a situation where three-dimensional image data are wrongly displayed on a display device that does not have the function of displaying a three-dimensional image, for example.

### [2B. Embodiment of recording detailed three-dimensional image information in an AV codec box (avc1) (second embodiment)]

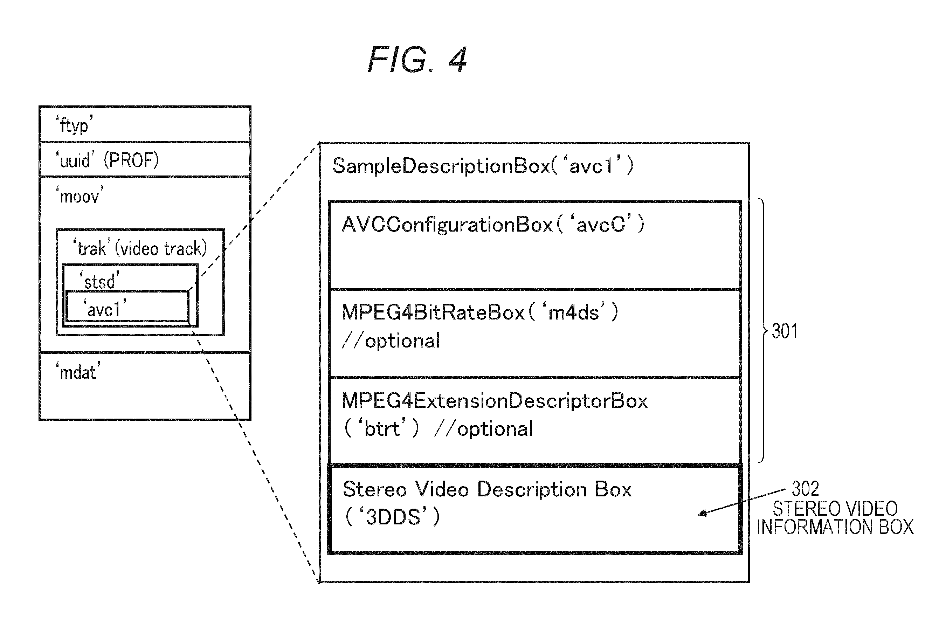

Next, an embodiment of recording detailed three-dimensional image information in an AV codec box (avc1) will be described with reference to Fig. 4.

As previously described with reference to Fig. 1, the AV codec box (avc1) is a box set in the level below the sample description box (stsd) further in the level below the track box 111 in the level below the movie box (moov).
As previously described, the AV codec box (avc1) is a box in which the codec information and the like of a sample being partitioned data obtained by partitioning the actual data stored in the actual data box (mdat) are recorded.

In this case, the codec information of all samples included in a track is set in the AV codec box (avc1). It is possible to set one or a plurality of AV codec boxes (avc1) in the level below the sample description box (stsd). However,it is not necessary to set a plurality ofAV codec boxes (avc1) if their contents are the same. In other words, it is not necessary for the number of samples to match the number of AV codec boxes, and even if there is a plurality of samples, it is possible to set one AV codec box, and the like.

In the second embodiment, the detailed three-dimensional image information is recorded in the AV codec box (avc1). Fig. 4 illustrates a data configuration example of the AV codec box (avc1) according to the embodiment.

Information of a data area 301 shown in Fig. 4 is a codec information storage area already specified in the conventional MP4 file format. The following information boxes are set in the data area 301.
AVCConfigurationBox
MPEG4BitRateBox
MPEG4ExtentionDescriptorBox
Information required for a decoding process of MP4 encoded data, in other words, the codec information is recorded in these boxes. These pieces of codec information are shared between two-dimensional images and three-dimensional images.

In the embodiment, in addition to these existing codec information boxes,
a stereo video information box (Stereo Video Description Box) 302
is added as shown in Fig. 4.
Recorded in the stereo video information box 302 are information on whether or not the image data stored in the actual data box (mdat) (refer to Fig. 1) of the MP4 file include a three-dimensional image, and detailed information related to the three-dimensional image data if the three-dimensional image is included. The detailed information includes the display method information of the three-dimensional image, for example.

As described above, methods for displaying a three-dimensional image (3D image) include various methods. For example, there is a method in compliance with the passive glasses system that separates images to be observed by the left and right eyes with polarizing filters and color filters, a method in compliance with the active glasses system that alternately opens and closes the left and right liquid crystal shutters and temporally separates images to be observed alternately for the left and right eyes, or the like. For example, a recording format of recording data to be stored in the MP4 file varies according to the display method.
The stereo video information box 302 also includes information on that the image data stored in the actual data box (mdat) (refer to Fig. 1) of the MP4 file are recording data that comply with which format.

For example, recording formats of three-dimensional image data include
a frame sequential format,
a side by side format, and
a top and bottom format.

The frame sequential format is a format that alternately records frames of an image for the left eye (L image) and an image for the right eye (R image) as in L, R, L,R,....
The side by side format is a format that records LR images by separating one frame image into left and right parts.
The top and bottom format is a format that records LR images by separating one frame image into top and bottom parts.
The detailed three-dimensional image information to be used for playback and display processes of a three-dimensional image, such as these image recording formats, is recorded in the stereo video information box 302.

A device that obtains an MP4 file via a recording medium or communication means and plays it back can obtain detailed information to be applied to playback and display processes of a three-dimensional image, such as that three-dimensional image data of the stored data of the MP4 file are data that comply with what recording format and display method, by obtaining the three-dimensional image information of the stereo video information box 302 set in the AV codec box (avc1), prior to actually obtaining the image from the actual data box (mdat) of the MP4 file.

Therefore, it is possible to prevent a situation where three-dimensional image data are wrongly displayed on a display device that does not have the function of displaying a three-dimensional image, for example. Moreover, it also becomes possible to examine whether or not the stored data are a three-dimensional image that can be played back or displayed on the device itself; accordingly, it becomes possible to retrieve the stored data of the MP4 file to start the decoding and playback processes after they are examined to be data that the device itself can process, and it becomes possible to eliminate the execution of a redundant process.

For a recording format of the detailed three-dimensional image information for the AV codec box (avc1), various settings are possible; however, a description will hereinafter be given of an example thereof.
In ISO/IEC14496 that specifies Advanced Video Coding (MPEG4-AVC), frame configuration information (Frame Packing Arrangement SEI) to construct each image frame for playback is already specified as normal codec information.

An example of a recording format of the detailed three-dimensional image information, which will be described below, is an example using a format substantially similar to the existing frame configuration information (Frame Packing Arrangement SEI).

A description will hereinafter be given of a specific data setting example of the frame configuration information (Frame Packing Arrangement SEI) being an example of the detailed three-dimensional image information to be recorded in the stereo video information box 302.
In the following example, a description will be given of a setting example of the frame configuration information compatible with the following recording formats of a three-dimensional image, in other words, the different recording formats of a three-dimensional image of:
(a) the frame sequential format [FS],
(b) the side by side format [SbS], and
(c) the top and bottom format [T&B].

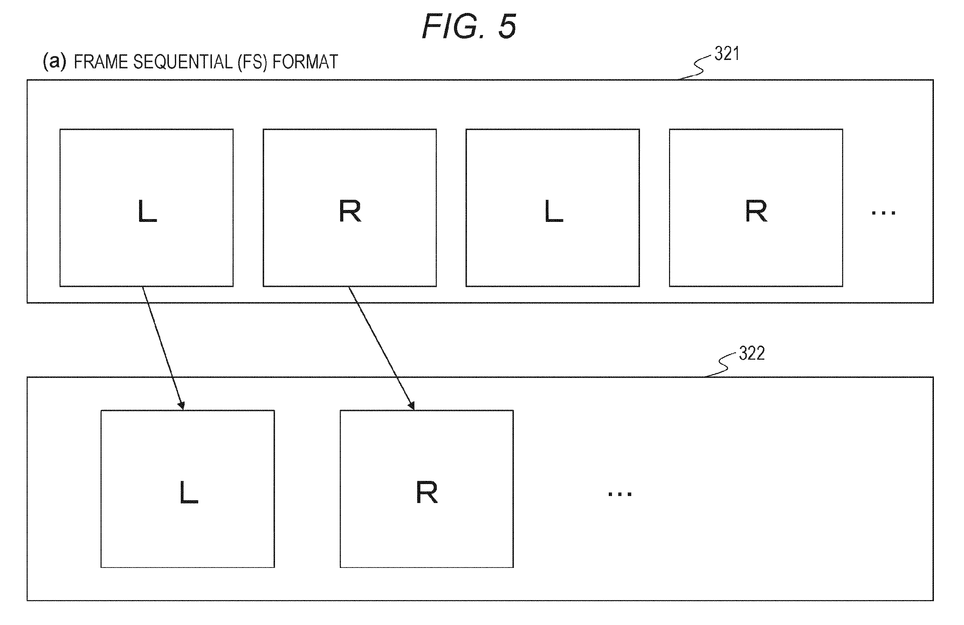

A description will first be given of the following methods of data decoding and playback processes of a three-dimensional image with reference to Figs. 5 to 7 prior to the description of the setting example of the detailed three-dimensional image information.
(a) the frame sequential format [FS],
(b) the side by side format [SbS], and
(c) the top and bottom format [T&B].

Fig. 5 is a view explaining methods of data decoding and playback processes in accordance with (a) the frame sequential (FS) format.
Fig. 5 illustrates a decoded image frame 321 and a display image frame 322, which are obtained as an MP4 decoding result.
In frame sequential format, an image for the left eye (L image) and an image for the right eye (R image) are alternately recorded as in LRLRLR.... Therefore, the images obtained from the MP4 decoding result are used as the L and R images of the display image frame 322.

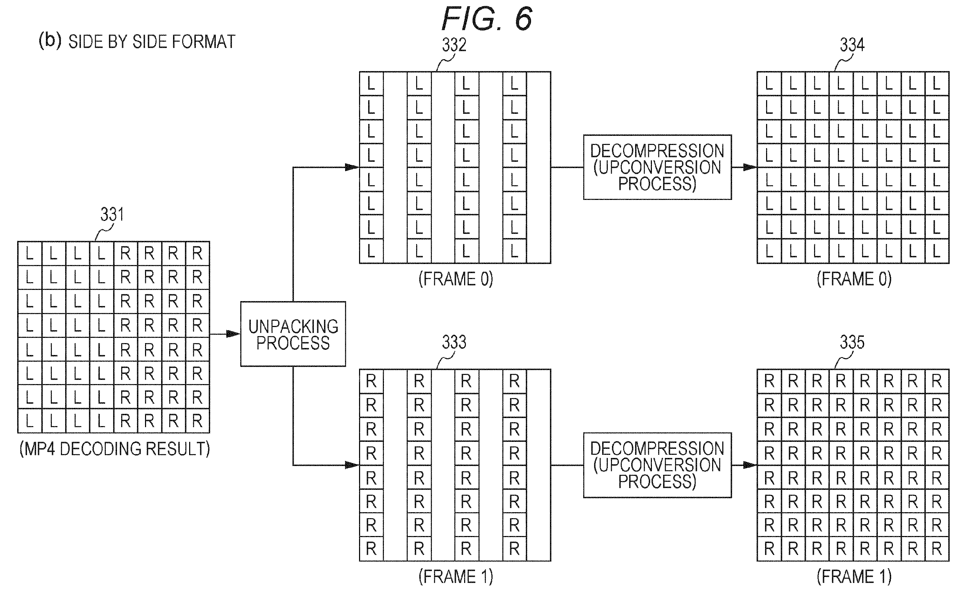

Fig. 6 is a view explaining methods of data decoding and playback processes in accordance with (b) the side by side (SbS) format.
Fig. 6 illustrates the image data of:
an MP4 decoding result image 331,
an unpacked L image (frame 0) 332,
an unpacked R image (frame 1) 333,
an L image for display (frame 0) 334, and
an R image for display (frame 1) 335.

In the side by side (SbS) format, as shown in the MP4 decoding result image 331, an image for the left eye (L image) and an image for the right eye (R image) are stored in an area separated into the left and right parts of one image frame.
First, the image is unpacked to generate the unpacked L image (frame 0) 332 and the unpacked R image (frame 1) 333. Furthermore, a decompression process (upconversion) is executed to generate the L image for display (frame 0) 334 and the R image for display (frame 1) 335.
In this manner, frame 0 and frame 1 are set as a pair of image frames.

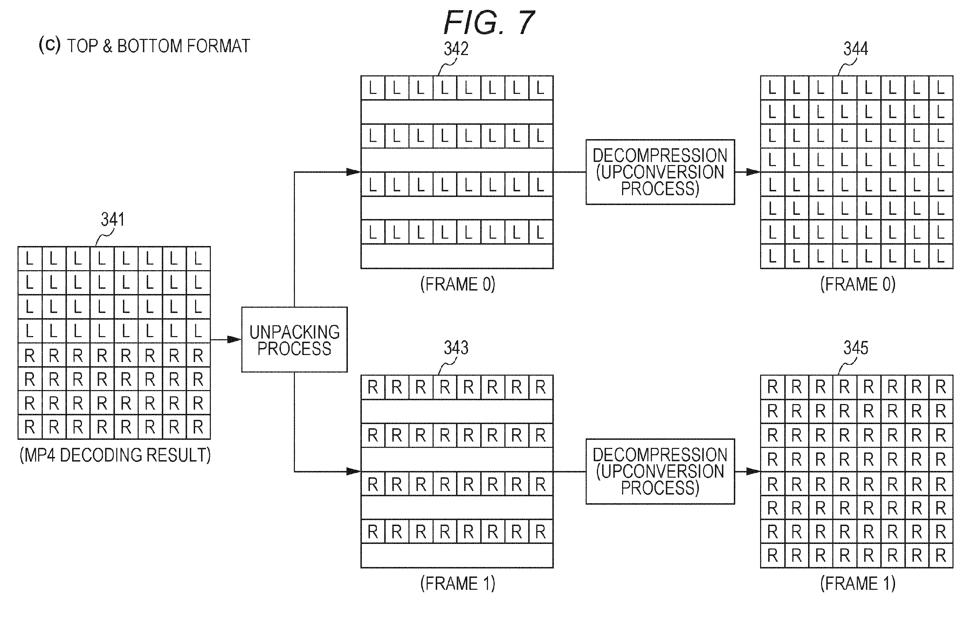

Fig. 7 is a view explaining methods of data decoding and playback processes in accordance with (c) the top and bottom (T&B) format.
Fig. 7 illustrates the image data of:
an MP4 decoding result image 341,
an unpacked L image (frame 0) 342,
an unpacked R image (frame 1) 343,
an L image for display (frame 0) 344, and
an R image for display (frame 1) 345.

In the top and bottom (T&B) format, as shown in the MP4 decoding result image 341, an image for the left eye (L image) and an image for the right eye (R image) are stored in an area separated into the top and bottom parts of one image frame.
First, the image is unpacked to generate the unpacked L image (frame 0) 342 and the unpacked R image (frame 1) 343. Furthermore, a decompression process (upconversion) is executed to generate the L image for display (frame 0) 344 and the R image for display (frame 1) 345.
Also in the top and bottom format, frame 0 and frame 1 are set as a pair of image frames.

In this manner, it is necessary to perform processes in accordance with the format of a three-dimensional image in a device that executes the playback and display of a three-dimensional image. In the configuration of the embodiment, detailed information to identify that the image stored in the MP4 file is a three-dimensional image that complies with which format is recorded in the stereo video information box 302 as the frame configuration information (Frame Packing Arrangement SEI).

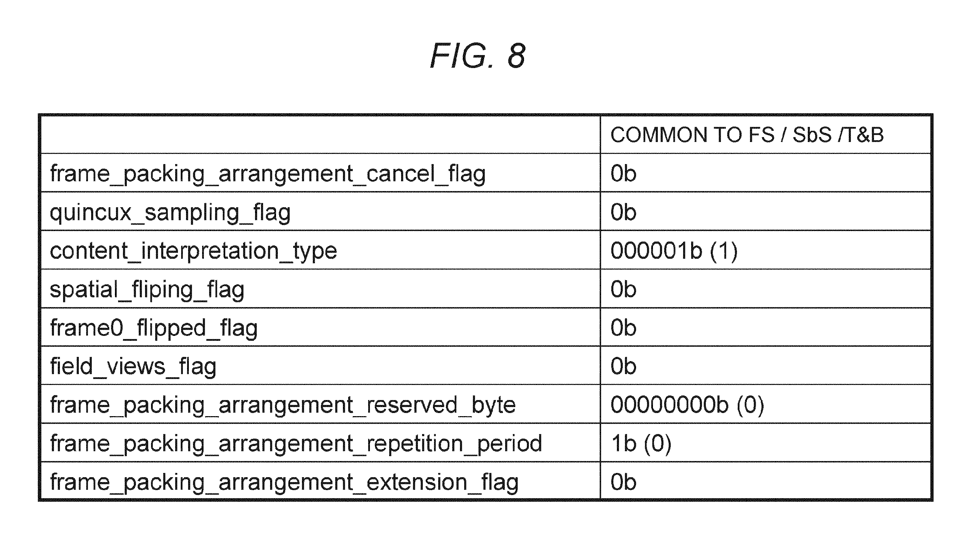

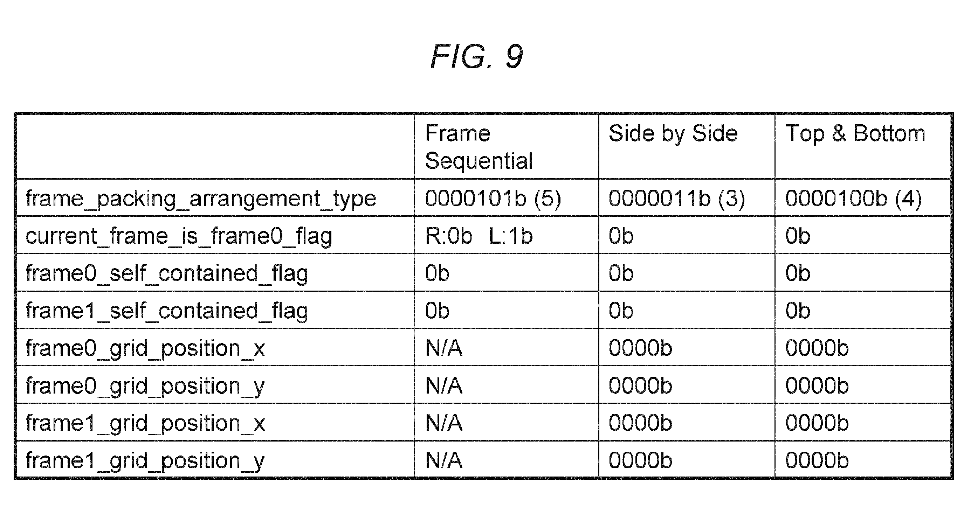

A description will be given, with reference to Figs. 8 and 9, of a data setting example of the frame configuration information as the detailed three-dimensional image information to be recorded in the stereo video information box 302 to be set in the AV codec box. Figs. 8 and 9 are views illustrating data setting examples of the case where a three-dimensional image stored in the MP4 file is compatible with the following three types of format:
(a) the frame sequential format [FS],
(b) the side by side format [SbS], and
(c) the top and bottom format [T&B].
The data setting example is of the frame configuration (Frame Packing Arrangement SEI) information compatible with these formats.

A description will hereinafter be given of each of the data of the frame configuration information as the detailed three-dimensional image information, which is shown in Fig. 8.
A frame packing arrangement cancel flag
(frame_packing_arrangement_cancel_flag)
If this flag is 1, it indicates that the frame configuration information is not used.
In the case of the frame configuration information as the three-dimensional image information to be recorded in the stereo video information box 302, 0 indicating the use of the frame configuration information is set in any format of the frame sequential format [FS], the side by side format [SbS], and the top and bottom format [T&B]. (b) of [0b] indicates a binary expression.

A quincunx sampling flag
(quincux_sampling_flag)
If this flag is 1, it indicates that sampling points of an image frame are set to five points of 3 × 3 pixels.
This flag is mainly used as information indicating a sampling location in a decoding process.
In the case of the frame configuration information as the three-dimensional image information to be recorded in the stereo video information box 302, the flag is set to 0 in any format of the frame sequential format [FS], the side by side format [SbS], and the top and bottom format [T&B].

A content interpretation type
(content_interpretation_type)
For example, each value of 0 to 2 is taken as the value of this field, and the content interpretation type information of:
0 = a set value in the case where there is no frame correlation,
1 = a set value in the case of the frame configuration information for a three-dimensional (stereo) image, and in the case where frame 0 is a frame for the left eye and frame 1 is a frame for the right eye, and
2 = a set value in the case of the frame configuration information for a three-dimensional (stereo) image, and in the case where frame 0 is a frame for the right eye and frame 1 is for a frame for the left eye,
is recorded.
In the case of the frame configuration information as the three-dimensional image information to be recorded in the stereo video information box 302, the flag is set to 1 in any format of the frame sequential format [FS], the side by side format [SbS], and the top and bottom format [T&B].

A spatial flipping flag
(spatial_fliping_flag)
A spatial flipped flag
(frame0_flipped_flag)
These flags store information on that a frame is configured by linking them in which configuration direction of an image frame, for example, in a horizontal direction or vertical direction.
The flag settings are used for deciding the format of upconversion (decompression process) of a two-dimensional image.
In the case of the frame configuration information as the three-dimensional image information to be recorded in the stereo video information box 302, these flags are not used, and the values of these flags are set to 0.

A field view flag
(field_views_flag)
Information on the format of an interleaving process of a frame is recorded.
In the case of the frame configuration information as the three-dimensional image information to be recorded in the stereo video information box 302, the flag is not used, and the value of the flag is set to 0.

A frame packing arrangement reserved byte
(frame_packing_arrangement_reserved_byte)
A frame packing arrangement repetition byte
(frame_packing_arrangement repetition_period)
A frame packing arrangement extension byte
(frame_packing_arrangement-extension flag)
These fields are recording fields to be reserved and for repeated data and extended data.
In the case of the frame configuration information as the three-dimensional image information to be recorded in the stereo video information box 302, these flags are not used, and the values of these flags are set to 0.

Fig. 9 is also a view illustrating a setting example of the frame configuration (Frame Packing Arrangement SEI) information compatible with the following three recording types of three-dimensional image of:
(a) the frame sequential format [FS],
(b) the side by side format [SbS], and
(c) the top and bottom format [T&B].

A frame configuration type
(frame_packing_arrangement_type)
A different value is set in accordance with the type of three-dimensional image in this field.
For example,
(a) the frame sequential format [FS] = 000101b (5),
(b) the side by side format [SbS] = 0000011b (3), and
(c) the top and bottom format [T&B] = 0000100b (4).
The playback device can distinguish that a three-dimensional image stored in a track is three-dimensional image data in which format, based on the set value of the field. In other words, the three-dimensional image stored in the track can be distinguished to be three-dimensional image data in which format among the frame sequential format [FS], the side by side format [SbS], and the top and bottom format [T&B].

Current frame = frame 0 flag
(current_frame_is_frame0_flag)
Information on whether or not the current frame obtained as an MP4 decoding result is a frame compatible with frame 0 is recorded in the field.
In the case of "(a) the frame sequential format [FS]" that records a three-dimensional image as the repetition of an L image frame, an R image frame, an L image frame and an R image frame, it is necessary to distinguish between an image for the left eye (L image) and an image for the right eye (R image) by unit of frame obtained as a result of decoding.
Therefore, in the case of (a) the frame sequential format [FS],
an image for the right eye (R image) = 0
an image for the left eye (L image) = 1
the above values are set in the field, for example.

In the other formats of (b) the side by side format [SbS] and (c) the top and bottom format [T&B], as described with reference to Figs. 6 and 7, both of an image for the left eye (L image = frame 0) and an image for the right eye (R image = frame 1) are generated based on the frame obtained as an MP4 decoding result; accordingly, the distinguishing process on the MP4 decoding result becomes unnecessary, and therefore 0 is set for the value of this field.

A frame 0 self-contained flag
(frame0_self_contained_flag)
A frame 1 self-contained flag
(frame1_self_contained_flag)
One is set as the values of the flags if the mutual frames should be referred to between the frames set as frames 0 and 1.
In the case of the frame configuration information as the three-dimensional image information to be recorded in the stereo video information box 302, this information is unnecessary in any format of the frame sequential format [FS], the side by side format [SbS], and the top and bottom format [T&B], and the values of the flags are set to 0.

A frame 0 grid position X
(frame0_grid_position_x)
A frame 0 grid position Y
(frame0_grid_position_y)
A frame1 grid position X
(frame1_grid_position_x)
A frame 1 grid position Y
(frame1_grid_position_y)
They are data fields to indicate a pixel position to be referred to upon the configuration process of an image frame.

In the case of the frame configuration information as the three-dimensional image information to be recorded in the stereo video information box 302, N/A (invalid value) is set in the frame sequential format [FS], and the flag values are set to 0 in the side by side format [SbS] and the top and bottom format [T&B].
For example, all the flag values are set to 0 in the side by side format [SbS] and the top and bottom format [T&B], which have been described with reference to Figs. 6 and 7. This indicates that a reference position is set to a coordinate position at the top left, designated by (X, Y) = (0, 0) for both frames 0 and 1.

As described with reference to Figs. 8 and 9, the set values of the frame configuration information (Frame Packing Arrangement SEI) compatible with each of the formats of:
(a) the frame sequential format [FS],
(b) the side by side format [SbS], and
(c) the top and bottom format [T&B]
are set for the frame configuration (Frame Packing Arrangement SEI) information in the stereo video information box 302.

The device that plays and displays a three-dimensional image refers to the detailed three-dimensional image information in the stereo video information box 302 to make it possible to identify that the image stored in the MP4 file is a three-dimensional image that complies with which format.
In other words, for example, the set values of the frame configuration information (Frame Packing Arrangement SEI) described with reference to Figs. 8 and 9 are referred to; accordingly, it becomes possible to identify that the image stored in the MP4 file is a three-dimensional image that complies with which format, and it becomes possible to generate, play back and display right data for displaying a three-dimensional image by executing a decoding process in compliance with the format of the stored image.

Therefore, it is possible to prevent a situation where three-dimensional image data are wrongly displayed on a display device that does not have the function of displaying a three-dimensional image, for example.
Moreover, it becomes possible to previously know whether data in accordance with a three-dimensional image display process that the device itself can execute are recorded, and only when it is judged that the device itself can execute the process, it is possible to start a process such as encoding by obtaining the actual data stored in the actual data box (mdat) 104 (refer to Fig. 1), and it becomes possible to avoid a situation where a redundant process is executed.

In the above embodiment, the description has been given of the example of recording the detailed three-dimensional image information compatible with each format of:
(a) the frame sequential format [FS],
(b) the side by side format [SbS], and
(c) the top and bottom format [T&B];
however, it may be configured to record information in accordance with other formats. Moreover, it may be configured to create the detailed three-dimensional image information not limited to the frame configuration information (Frame Packing Arrangement SEI) described with reference to Figs. 8 and 9 but in other formats and record the information in the AV codec box (avc1).

### [2C. (3) Embodiment of recording the detailed three-dimensional image information by use of a scheme information box (sinf) to be specified as an extended configuration of the AV codec box (avc1) (third embodiment)]

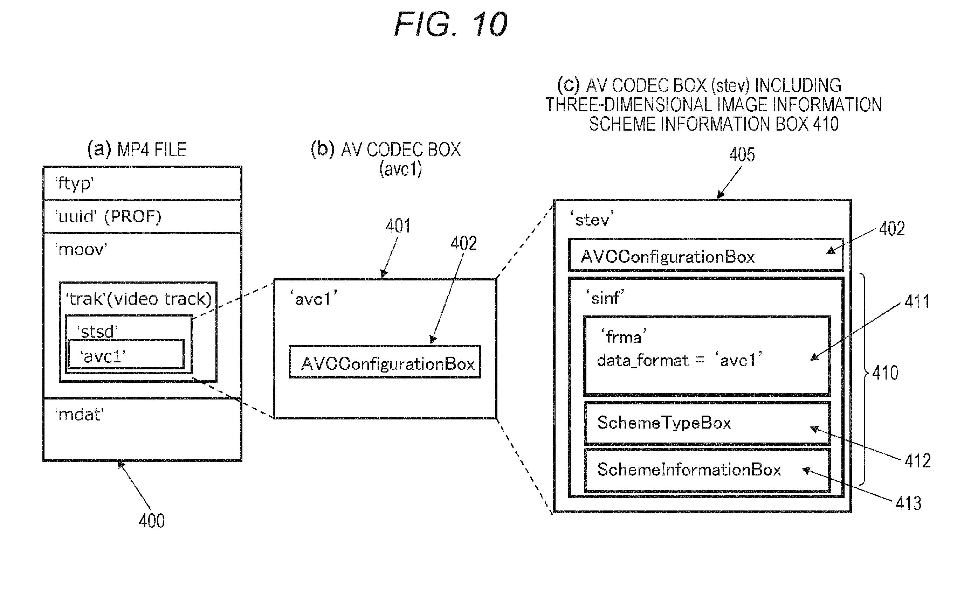

Next, a description will be given, with reference to Figs. 10(a), 10(b) and 10(c) and the subsequent drawings, of an embodiment of recording the detailed three-dimensional image information by use of a scheme information box (sinf) to be specified as an extended configuration of the AV codec box (avc1) of the MP4 file.

As previously described with reference to Fig. 1, the AV codec box (avc1) is a box set in the level below the sample description box (stsd) further in the level below the track box 111 in the level below the movie box (moov).
As previously described, the AV codec box (avc1) is a box in which the codec information and the like of a sample being partitioned data obtained by partitioning the actual data stored in the actual data box (mdat) are recorded.

In this case, the codec information of all samples included in a track is set in the AV codec box (avc1). It is possible to set one or a plurality of AV codec boxes (avc1) in the level below the sample description box (stsd). However, it is not necessary to set a plurality ofAV codec boxes (avc1) if their contents are the same. In other words, it is not necessary for the number of samples to match the number of AV codec boxes, and even if there is a plurality of samples, it is possible to set one AV codec box, and the like.

In the third embodiment, the detailed three-dimensional image information is recorded in the AV codec box (avc1), similarly to the second embodiment. However, in the third embodiment, the detailed three-dimensional image information is recorded by use of the scheme information box (sinf) to be specified as an extended configuration of the AV codec box (avc1).

In ISO/IEC14496 that specifies the file format of MP4, if the stored data of an MP4 file are recorded as any converted data such as that data stored in MP4 are stored as encrypted data, the scheme information box (sinf) is specified as an area to record data configuration information on the data. For example, if the stored data of an MP4 file is recorded as encrypted converted data, the scheme information box (sinf) is specified as an area to record the encryption format information.

In the current specification of ISO/IEC14496 that specifies the file format of MP4, it is specified that one scheme information box (sinf) that stores data configuration information can be set in the level below the AV codec box (avc1).
For example, if the MP4 stored data are encrypted data, a playback device can obtain information necessary to decode the encrypted data by referring to the scheme information box (sinf) set in the AV codec box (avc1).

In the embodiment, the scheme information box is used. In other words, the scheme information box in which the data configuration information of a three-dimensional (stereo) image is stored is defined.
A description will be given, with reference to Figs. 10(a), 10(b) and 10(c), of an example where the data configuration information of a three-dimensional (stereo) image, in other words, the detailed three-dimensional image information is stored in the scheme information box (sinf).

Figs. 10(a), 10(b) and 10(c) illustrate the data configurations of:
(a) an MP4 file 400,
(b) an AV codec box (avc1) 401, and
(c) an AV codec box 405 including a three-dimensional image information scheme information box 410.

For example, if a three-dimensional image is not included in the MP4 file 400, the scheme information box (sinf) in which the detailed three-dimensional image information is recorded is not set, and the AV codec box (avc1) in the MP4 file has a data configuration having only the AV codec box (avc1) 401 shown in Fig. 10(b), for example, in other words, an AVC data configuration information box [AVCConfigurationBox] 402 in which the AVC data configuration information is stored. In the AVC data configuration information box (AVCConfigurationBox] 402, the codec information required for a decoding process of MP4 data is recorded.

If a three-dimensional image is included in the MP4 file, the AV codec box (avc1) 401 shown in Fig. 10(b) is set as the AV codec box 405 including the three-dimensional image information scheme information box 410, which is shown in Fig. 10(c).

A code (4CC: four-character-code) corresponding to the box name of the AV codec box (avc1) 401 without the three-dimensional image information scheme information box, which is shown in Fig. 10(b), is [avc1]; however,
the AV codec box 405 including the three-dimensional image information scheme information box 410, which is shown in Fig. 10(c), changes the code (4CC: four-character-code) corresponding to the box name, to [stev] that indicates the inclusion of information related to stereo video data. In other words, it becomes possible to distinguish the AV codec box 405 including the three-dimensional image information scheme information box 410 from the box name (4CC). The box name (4CC) corresponds to the file name of the AV codec box 405, and the playback device can distinguish the AV codec box including the three-dimensional image information scheme information box from the file name.

The three-dimensional image information scheme information box 410 includes the boxes of:
a format information box (frma) 411,
a scheme type box (SchemeTypeBox) 412, and
a detailed scheme information box (SchemeInformationBox) 413.

If the format information is recorded in the format information box (frma) 411, for example, the data indicate to be in accordance with the AVC format,
data_format ='avc1'
such format information is recorded.

In the scheme type box (SchemeTypeBox) 412, information indicating the type of the scheme information box 410 is recorded. In the example, the scheme information box 410 is a scheme information box in which detailed information of a three-dimensional image is stored; accordingly, the type information indicating to be a scheme information box in which the detailed three-dimensional image information is stored is recorded in the scheme type box (SchemeTypeBox) 412.

In the detailed scheme information box (SchemeInformationBox) 413, specific detailed information of a three-dimensional image is recorded. The detailed three-dimensional image information to be stored in the detailed scheme information box (SchemeInformationBox) 413 includes information similar to the frame configuration information (Frame Packing Arrangement SEI) described in the previous second embodiment. Information required upon executing a playback and a display process of a three-dimensional image is recorded.
Specifically, for example, the detailed three-dimensional image information compatible with each format of:
(a) the frame sequential format [FS],
(b) the side by side format [SbS], and
(c) the top and bottom format [T&B]
is recorded.

A device that plays back and displays a three-dimensional image can identify that the image stored in the MP4 file is a three-dimensional image that complies with which format, by obtaining the detailed three-dimensional image information from the detailed scheme information box (SchemeInformationBox) 413 of the three-dimensional image information scheme information box 410 set as the low-order information of the AV codec box (avc1). The playback device refers to the record information of the detailed scheme information box (SchemeInformationBox) 413 of the three-dimensional image information scheme information box 410, and can generate, play back and display right data for displaying a three-dimensional image by executing a decoding process in compliance with the format of the stored image.

Therefore, it is possible to prevent a situation where three-dimensional image data are wrongly displayed on a display device that does not have the function of displaying a three-dimensional image, for example.
Moreover, it becomes possible to previously know whether data in accordance with a three-dimensional image display process that the device itself can execute are recorded, and only when it is judged that the device itself can execute the process, it is possible to start a process such as encoding by obtaining the actual data stored in the actual data box (mdat) 104 (refer to Fig. 1), and it becomes possible to avoid a situation where a redundant process is executed.

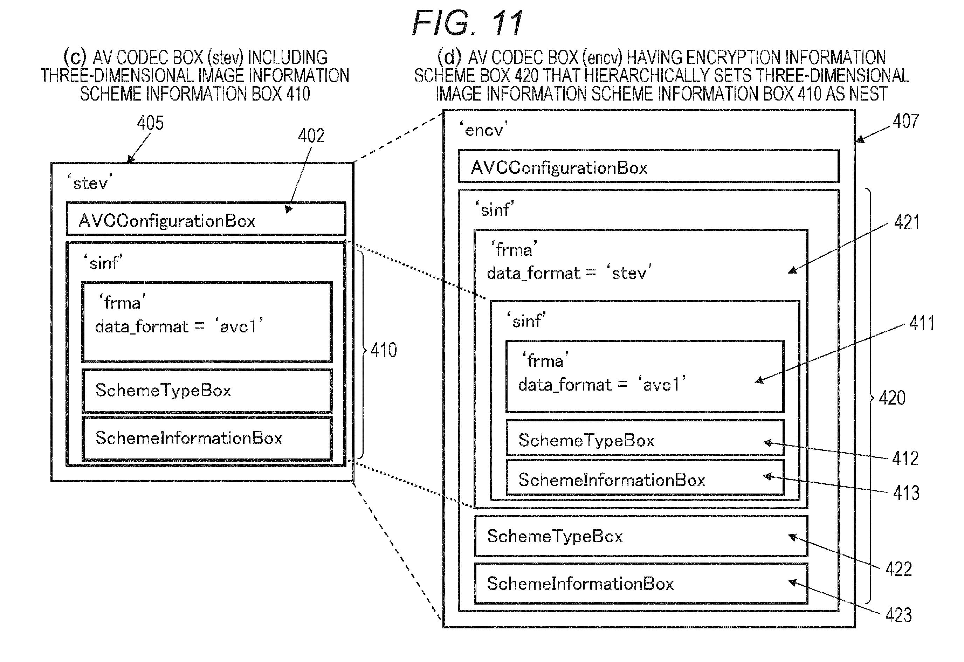

Next, a description will be given, with reference to Fig. 11, of the configuration of using the scheme information box of when the data stored in the actual data box (mdat) of the MP4 file are three-dimensional image data and, further, are also encrypted data.

Fig. 11 illustrates the data configurations of:
(c) the AV codec box 405 including the three-dimensional image information scheme information box 410, and
(d) an AV codec box 407 having an encryption information scheme information box 420 hierarchically setting the three-dimensional image information scheme information box 410 as a nest.
The data (c) are the AV codec box 405 having the same configuration as the data in Fig. 10(c).

If the actual data stored in the MP4 file are a three-dimensional image and, further, are encrypted, the playback device requires not only first data configuration information (detailed three-dimensional image information) but also second data configuration information (encryption information).
The example shown in Fig. 11 has a configuration to set these individual pieces of data configuration information as individual scheme information boxes, and hierarchically arrange and record them.

In the example shown in Fig. 11, a plurality of scheme information boxes (sinf) is hierarchically arranged (nested) to be stored in the AV codec box.
In other words, as shown in the AV codec box (encv) 407 shown in Fig. 11(d), two scheme information boxes of:
(1) the first scheme information box (sinf) 410 that stores data configuration information (detailed three-dimensional image information) of a three-dimensional (stereo) image, and
(2) the second scheme information box (sinf) 420 that stores data configuration information (encryption format information) of an encryption process are hierarchically arranged, in other words, are set in a nesting state to be stored in the AV codec box.

In the embodiment, as shown in Fig. 11 (d), the first scheme information box (sinf) 410 in which the data configuration information (detailed three-dimensional image information) of a three-dimensional (stereo) image is stored is a box set in the level below the format information box (frma) of the second scheme information box (sinf) 420 in which the data configuration information (encryption format information) of an encryption process is stored.

The code (4CC: four-character-code) corresponding to the box name of the AV codec box (avc1) 401 without the three-dimensional image information scheme information box, which is shown in Fig. 10(b), is [avc1], and the code (4CC: four-character-code) corresponding to the box name of the AV codec box 405 including the three-dimensional image information scheme information box 410, which is shown in Fig. 11(c), is [stev] that indicates the inclusion of information related to stereo video data.

Furthermore, the AV codec box 407 having the encryption information scheme information box 420 including the three-dimensional image information scheme information box 410 as a nest, which is shown in Fig. 11(d), sets the code (4CC: four-character-code) corresponding to the box name as [encv] that indicates the inclusion of information related to encrypted video data. Accordingly, it becomes possible to distinguish the AV codec box 405 including the encryption information scheme information box 420 from the box name (4CC).

The data configuration information (detailed three-dimensional image information) of a three-dimensional (stereo) image is stored in the first scheme information box (sinf) 410.
The first scheme information box (sinf) 410 includes boxes similar to those previously described with reference to Fig. 10, in other words, the boxes of:
a format information box (frma) 411,
a scheme type box (SchemeTypeBox) 412, and
a detailed scheme information box (SchemeInformationBox) 413.

If the format information is recorded in the format information box (frma) 411, for example, the data indicate to be in accordance with the AVC format,
data_format ='avc1'
such format information is recorded.

In the scheme type box (SchemeTypeBox) 412, information indicating the type of the scheme information box 410 is recorded. In the example, the scheme information box 410 is a scheme information box in which the detailed information of a three-dimensional image is stored; accordingly, the type information indicating to be a scheme information box in which the detailed information of a three-dimensional image is stored is recorded in the scheme type box (SchemeTypeBox) 412.

In the detailed scheme information box (SchemeInformationBox) 413, the specific detailed information of a three-dimensional image is recorded. The detailed three-dimensional image information to be stored in the detailed scheme information box (SchemeInformationBox) 413 includes information similar to the frame configuration information (Frame Packing Arrangement SEI) described in the previous second embodiment.
In other words, for example, the detailed three-dimensional image information compatible with each format of:
(a) the frame sequential format [FS],
(b) the side by side format [SbS], and
(c) the top and bottom format [T&B]
is recorded.

The playback device refers to the detailed three-dimensional image information stored in the first scheme information box (sinf) 410 and can obtain the detailed information of the three-dimensional image stored in the actual data box (mdat) of the MP4 file.

Moreover, the data configuration information (encryption format information) of an encryption process is stored in the second scheme information box (sinf) 420.
The second scheme information box (sinf) 420 includes boxes of:
a format information box (frma) 421,
a scheme type box (SchemeTypeBox) 422, and
a detailed scheme information box (SchemeInformationBox) 423.

The format information box (frma) 421 holds the first scheme information box (sinf) 410 in which the data configuration information (detailed three-dimensional image information) of a three-dimensional (stereo) image is stored, as data in the low hierarchy, in other words, as a nesting state.
Furthermore, the format information is recorded. In this example, as format data indicating the storage of the first scheme information box (sinf) 410 in which the data configuration information (detailed three-dimensional image information) of a three-dimensional (stereo) image is stored,
data_format = 'stev'
such format information is recorded.

In the scheme type box (SchemeTypeBox) 422, information indicating the type of the scheme information box 420 is recorded. In the example, the scheme information box 420 is a scheme information box in which the detailed information of an encryption process is stored; accordingly, information indicating to be a scheme information box in which the detailed encryption information is stored is recorded in the scheme type box (SchemeTypeBox) 422.

In the detailed scheme information box (SchemeInformationBox) 423, the specific detailed information of an encryption process is recorded. In terms of the encryption information to be stored in the detailed scheme information box (SchemeInformationBox) 423, information required to decode the encrypted data in the playback device is recorded.

The playback device refers to the encryption format information stored in the second scheme information box (sinf) 420, and can obtain information required for a decoding process of the data stored in the actual data box (mdat) of the MP4 file.

If a playback process and a display process are performed, when different pieces of data configuration information, in other words, different pieces of data configuration information such as three-dimensional image information and encryption information are required, a scheme information box for each piece of the data configuration information is set as shown in Fig. 11(d), and they are recorded in the AV codec box as a hierarchical configuration (nest).
Such a data configuration information recording process makes it possible to obtain all information required for playback and display processes of the actual data stored in the MP4 file, from the AV codec box.

The example described with reference to Fig. 11 is an example where the following two scheme information boxes, in other words, two scheme information boxes of:
(1) the first scheme information box (sinf) 410 that stores data configuration information (detailed three-dimensional image information) of a three-dimensional (stereo) image, and
(2) the second scheme information box (sinf) 420 that stores data configuration information (encryption format information) of an encryption process, which are for different pieces of data configuration information, are hierarchically arranged, in other words, are set in a nesting state to be stored in the AV codec box.

In addition, multiple scheme information boxes set into a plurality of, for example, three or more levels can be set for various pieces of data configuration information related to the actual data stored in the MP4 file. As in the embodiment, the use of a hierarchical (nested) configuration of scheme information boxes makes it possible to set any number of various pieces of data configuration information and data conversion information, which are required upon playback and display processes, and record them as management information.

The playback device obtains these pieces of management information to enable the playback and display of the actual data stored in the MP4 file without error.

### [3. An image process sequence to be executed by an information processing device]

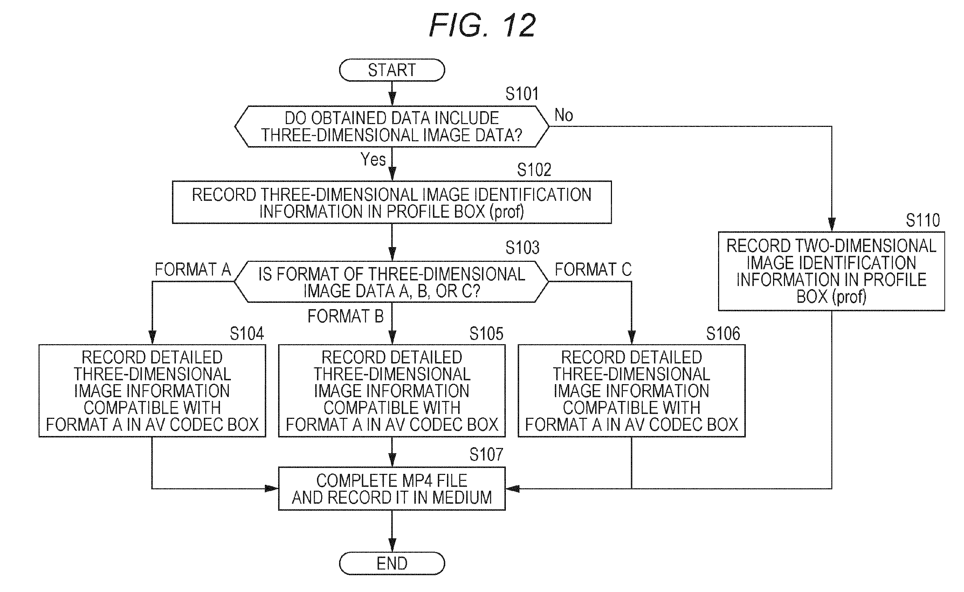

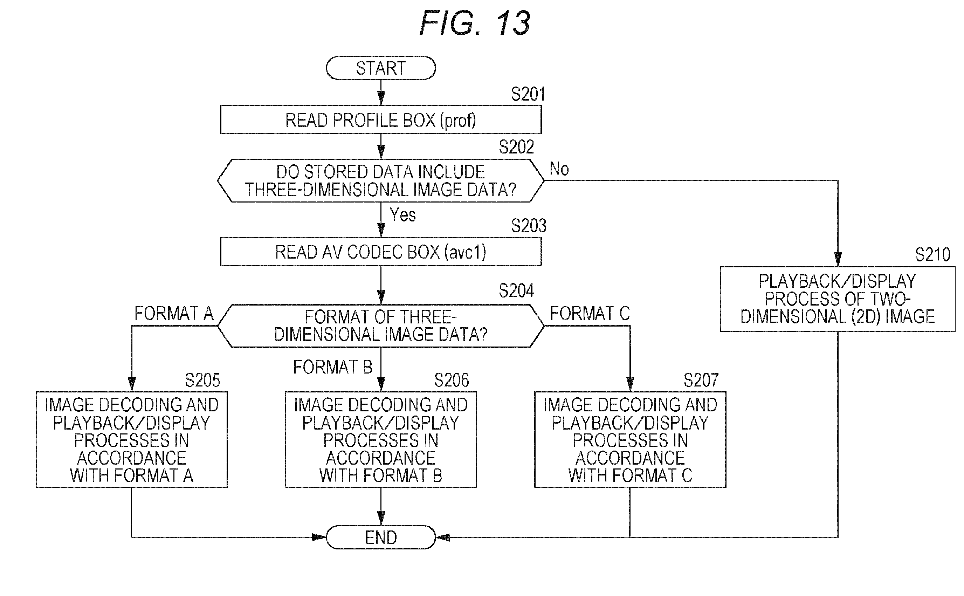

Next, a description will be given, with reference to the flowcharts shown in Figs. 12 and 13, of an image process sequence to be executed by an image processing device according to an embodiment of the present invention.
Fig. 12 is a flowchart explaining a recording process sequence of image data.
Fig. 13 is a flowchart explaining a playback process sequence of image data.

First, a recording process sequence of image data will be described with reference to the flowchart shown in Fig. 12.
The processes in accordance with the flowchart shown in Fig. 12 are executed in an imaging device, such as a camera, that executes the processes of shooting an image and recording it in a recording medium. For example, they are the processes to be executed under the control of a control unit, such as a CPU, provided to the imaging device.
A description will be given of a process of each step of the flowchart shown in Fig. 12.

In Step S101, for example, it is judged whether or not data that have been obtained by a shooting process and are intended to be recorded in a recording media include three-dimensional image data.
In Step S101, if three-dimensional image data are included in the data intended to be recorded in a medium, the judgment in Step S101 is Yes, and the process proceeds to Step S102.

In Step S102, the three-dimensional image identification information is recorded in the profile box of the MP4 file.
This process is the process corresponding to [[3-1. (1) Embodiment of recording three-dimensional image identification information in a profile box (uuid (PROF)) (first embodiment)] previously described. In other words, the process is the process described with reference to Figs. 2 and 3.

As the values of the following flags described with reference to Fig. 2, in other words, the flags of:
the stereo video flag 201, and
the mixed stereo video flag 202,
the values of the flags shown in Fig. 3 are set depending on the type of data intended to be recorded.

Next, in Step S103, the format of the three-dimensional image data intended to be recorded is judged. This flow takes an example of distinguishing between three types of A, B and C. They comply with, for example, the following three types described in the previous second and third embodiments:
(a) the frame sequential format [FS],
(b) the side by side format [SbS], and
(c) the top and bottom format [T&B].
They comply with these formats.

If the judgment in Step S103 is judged to be format A, the process proceeds to Step S104, and the detailed three-dimensional image information compatible with format A is recorded in the AV codec box of the MP4 file.
Moreover, if the judgment in Step S103 is judged to be format B, the process proceeds to Step S105, and the detailed three-dimensional image information compatible with format B is recorded in the AV codec box of the MP4 file.
Moreover, if the judgment in Step S103 is judged to be format C, the process proceeds to Step S106, and the detailed three-dimensional image information compatible with format C is recorded in the AV codec box of the MP4 file.

The processes of Steps S104 to S106 correspond to the process in the second or third embodiment previously described.
In other words, they correspond to the process of [3-2. (2) Embodiment of recording detailed three-dimensional image information in an AV codec box (avc1) (second embodiment)] or [3-3. (3) Embodiment of recording the detailed three-dimensional image information by use of a scheme information box (sinf) to be specified as an extended configuration of the AV codec box (avc1) (third embodiment)].
It may be configured to execute either of the processes of the second and third embodiments, or may be configured to execute both.

As described with reference to Fig. 1, the AV codec box is a box, set in the level below the sample description box (stsd) further in the level below the track box in the level below the movie box (moov), which stores codec information.

In the process of the second embodiment, as described with reference to Figs. 4 to 9, the stereo video information box 302 (refer to Fig. 4) is set in the AV codec box and, for example, the frame configuration information as the detailed three-dimensional image information, which is described with reference to Figs. 8 and 9, is recorded herein. As described with reference to Figs. 8 and 9, different pieces of data are recorded in accordance with the format of a three-dimensional image.

Moreover, if the process of the third embodiment is performed, the scheme information box is set to record the detailed three-dimensional image information in the scheme information box, as described with reference to Figs. 10 and 11. Also in this case, different pieces of data are recorded in accordance with the format of a three-dimensional image.

After the completion of these processes of Steps S 104 to S106, the process proceeds to Step S107 to complete the MP4 file and execute a recording process on a medium.

If it is judged in Step S101 that the obtained data does not include three-dimensional image data, the judgment in Step S101 results in the judgment of No, and the process proceeds to Step S110. In Step S110, the two-dimensional image identification information is recorded in the profile box of the MP4 file.

The process is the process corresponding to [[3-1. (1) Embodiment of recording three-dimensional image identification information in a profile box (uuid (PROF)) (first embodiment)] previously described. In other words, the process is the process described with reference to Figs. 2 and 3. In other words, as the values of the following flags shown in Fig. 2 of:
the stereo video flag (stereo video flag) 201, and
the mixed stereo video flag (Mixed stereo video flag) 202,
the values of the flags, which indicate that the data intended to be recorded are only two-dimensional image data, are set. The process proceeds to Step S107 afterward to complete the MP4 file and execute a recording process on a medium.

The flow shown in Fig. 12 has been described as an example of an MP4 file creation process in a data recording process on a recording medium; however, also if an MP4 file is generated as communication data, the MP4 file creation process is performed in a similar process sequence.

Moreover, the flow shown in Fig. 12 has been described as a setting example of reading both of the three-dimensional image identification information of the profile box of the above-mentioned first embodiment, and the detailed three-dimensional image information of the AV codec box of the second or third embodiment; however, it may be configured to perform the process of reading and using only the three-dimensional image identification information of the profile box of the first embodiment, or may be configured to perform the process of reading and using only the detailed three-dimensional image information of the AV codec box of the second or third embodiment.

Next, a playback process sequence of image data will be described with reference to the flowchart shown in Fig. 13.
The processes in accordance with the flowchart shown in Fig. 13 are executed in a playback device that executes processes on an MP4 file read from a recording medium or an MP4 file received as communication data, for example. For example, they are the processes to be executed under the control of a control unit, such as a CPU, provided to the playback device.
A description will be given of a process of each step of the flowchart shown in Fig. 13.

First, in Step S201, information of the profile box (PROF) of the MP4 file is obtained.
This process is the process corresponding to [[3-1. (1) Embodiment of recording three-dimensional image identification information in a profile box (uuid (PROF)) (first embodiment)] previously described. In other words, the process is the process of obtaining the information of the profile box (PROF) of the MP4 file, which is described with reference to Figs. 2 and 3.

Specifically, the values of the following flags shown in Fig. 2, in other words, the flags of:
the stereo video flag 201, and
the mixed stereo video flag 202
are read.

As previously described with reference to Fig. 3, the flag set values enable the following data identification.

### (Case 1)

Stereo video flag = 1, mixed stereo video flag = 0,
In this case,
it is judged that
(a) All image data stored in the MP4 file are three-dimensional images (stereo images).

### (Case 2)

Stereo video flag = 0, mixed stereo video flag = 0,
In this case,
it is judged that
(b) All image data stored in the MP4 file are two-dimensional images.

### (Case 3)

Stereo video flag = 0, mixed stereo video flag = 1,
In this case,
it is judged that
(c) Image data stored in the MP4 file are mixed data of a three-dimensional image (stereo image) and a two-dimensional image.

If it is judged in Step S202 that three-dimensional image data are not included from the read of the flags as the three-dimensional image identification information of the profile box in Step S201, the process proceeds to Step S210 to obtain, play back and display the two-dimensional image data from the MP4 file.

On the other hand, if it is judged in Step S202 that three-dimensional image data are included, the process proceeds to Step S203.
In Step S203, the information of the AV codec box of the MP4 file is obtained.
The process corresponds to the process of reading recorded data of the above-mentioned [3-2. (2) Embodiment of recording detailed three-dimensional image information in anAV codec box (avc1) (second embodiment)] or [3-3. (3) Embodiment of recording the detailed three-dimensional image information by use of a scheme information box (sinf) to be specified as an extended configuration of the AV codec box (avc1) (third embodiment)].

For example, if the three-dimensional information recording process corresponding to the second embodiment is performed, as described with reference to Figs. 4 to 9, the stereo video information box 302 (refer to Fig. 4) is set in the AV codec box and, for example, the frame configuration information as the detailed three-dimensional image information, which has been described with reference to Figs. 8 and 9, is recorded herein. In Step S203, the detailed three-dimensional image information is read from the stereo video information box 302 (refer to Fig. 4).

For example, it becomes possible to distinguish that the data intended to be played back are data that complies with which format of:
(a) the frame sequential format [FS],
(b) the side by side format [SbS], and
(c) the top and bottom format [T&B],
by reading the set values of the frame configuration information as the detailed three-dimensional image information, which has been described with reference to Figs. 8 and 9, for example.

Moreover, if the three-dimensional information recording process corresponding to the third embodiment is performed, the scheme information box is recorded as the lower data of the AV codec box as described with reference to Figs. 10 and 11, and the detailed three-dimensional image information is read from the scheme information box.

At least the detailed three-dimensional image information recorded in accordance with either format of the second and third embodiments is obtained, and it becomes possible to examine the three-dimensional image format of the data intended to be played back. With the examination, the format judgment process in Step S204 is executed. In other words, in Step S204, the format of the data intended to be played back is judged among formats A, B and C based on the detailed three-dimensional image information obtained from the AV codec box.

If the three-dimensional image data are judged to be compatible with format A, the process proceeds to Step S205 to carry out decoding (a decoding, decompression process) of the image compatible with format A and execute a playback and a display process.
If the three-dimensional image data are judged to be compatible with format B, the process proceeds to Step S206 to carry out decoding (a decoding, decompression process) of the image compatible with format B and execute a playback and a display process.
If the three-dimensional image data are judged to be compatible with format C, the process proceeds to Step S207 to carry out decoding (a decoding, decompression process) of the image compatible with format C and execute a playback and a display process.

In this manner, the image processing device can obtain information on whether or not a three-dimensional image is included in the data stored in the MP4 file and, further, the record playback format if three-dimensional image data are included, from the profile box and the AV codec box as management information in the MP4 file, by performing the processes in accordance with the present invention.
Therefore, it becomes possible to examine whether or not the data are three-dimensional image data that can be played back by the device itself prior to obtaining the actual data of the MP4 file to execute an analysis or playback process, and it becomes possible to obtain the actual data to execute right decoding and playback processes in accordance with the process compatible with the format, only when it is judged that the data can be played back.

The flow shown in Fig. 13 has been described as an example of generating an MP4 file where both of the three-dimensional image identification information of the profile box of the first embodiment, and the detailed three-dimensional image information of the AV codec box of the second or third embodiment are recorded in the MP4 file described in the above-mentioned first to third embodiments; however, it may be configured to perform the process of recording only the three-dimensional image identification information of the profile box of the first embodiment, or may be configured to perform the process of recording only the detailed three-dimensional image information of the AV codec box of the second or third embodiment.

### [4. A configuration example of an image processing device of the present invention]

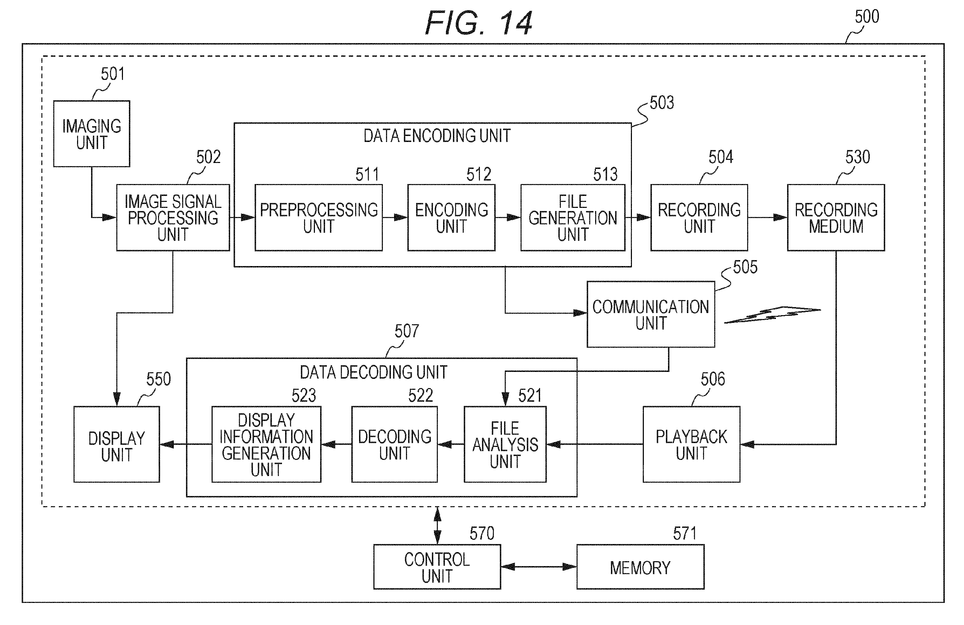

Next, a configuration example of an image processing device of the present invention will be described with reference to Fig. 14. Fig. 14 illustrates a configuration example of an imaging device 500 as an embodiment of the image processing device of the present invention. The imaging device 500 has the function of shooting images from different points of view, which are applied to three-dimensional image display, and has the function capable of switching between the shooting of a two-dimensional image and a three-dimensional image by a user's mode setting.

An imaging unit 501, for example, has a plurality of lens units set in different locations, and has a configuration capable of simultaneously shooting images from different points of view. When set in three-dimensional image shooting mode, images shot via the plurality of lens units are input. When set in two-dimensional image shooting mode, only an image shot via one lens unit is input.

An image signal processing unit 502 executes the signal processes of shot image data such as white balance adjustment. A data encoding unit 503 generates an MP4 file. If the input data are a three-dimensional image, a preprocessing unit 511 executes a preprocess in accordance with each format. Specifically, for example, in accordance with the formats described with reference to Figs. 5 to 7, in other words, the formats of:
(a) the frame sequential format [FS],
(b) the side by side format [SbS], and
(c) the top and bottom format [T&B],
an image for MP4 decoding is generated from the shot images. For example, if the recording data are generated in accordance with the side by side format [SbS] shown in Fig. 6, the shot images are two images corresponding to the L image for display (frame 0) 334 and the R image for display (frame 1) 335, which are shown on the right side of Fig. 6, and these images are applied to generate an image frame corresponding to the MP4 decoding result image 331 shown on the left side of Fig. 6.

The data are input to an encoding unit 512 to execute an encoding (encoding) process in accordance with the MP4 format. Furthermore, a file generation unit 513 executes a recording process on the profile box of the three-dimensional image identification information, the recording process on the AV codec box on the detailed three-dimensional image information, and the like, which have been previously described in the first to third embodiments, to generate an MP4 file.

The file generation unit 513 generates an MP4 file being an encoded data storage file including the encoded data of the image data generated by the encoding unit 512 and the management information of the encoded data.
The file generation unit 513 records three-dimensional image identification information that indicates whether or not the image data to be stored in the file include three-dimensional image data, in the profile box of the MP4 file upon the generation of the MP4 file.
The process of recording the three-dimensional image identification information in the profile box of the MP4 file corresponds to the process previously described with reference to the first embodiment.

Moreover, if three-dimensional image data are included in the file storage image data, the file generation unit 513 records, in the AV codec box, the detailed three-dimensional image information that makes it possible to distinguish the format of the three-dimensional image.
The process of recording the detailed three-dimensional image information in the AV codec box corresponds to the processes previously described with reference to the second and third embodiments.

For example, if the process corresponding to the third embodiment is executed, the file generation unit 513 generates a scheme information box including data configuration information where information to be applied to a data process upon a playback process of the encoded data is set by unit of category of the data process, and generates a file where a plurality of scheme information boxes by unit of category is hierarchically arranged and is recorded in the management information.
The file generation unit 513 performs the process of recording the detailed three-dimensional image information by unit of partitioned data by unit of track or sample being partitioned data of the image data stored in the MP4 file.

The MP4 file generated by the data encoding unit 503 is provided to a recording unit 504 and is recorded in a recording medium 530 such as a flash memory, an HDD and a DVD.
Otherwise, the MP4 file generated by the data encoding unit 503 is provided to a communication unit 505, and is packetized to perform a transmission process.

The MP4 file including the encoded data of the image data and the management information of the encoded data is recorded in the recording medium 530 by the data recording process. The management information included in the MP4 file includes the three-dimensional image identification information that indicates whether or not the image data include three-dimensional image data and the detailed three-dimensional image information that can distinguish the format of the three-dimensional image. Therefore, a device that reads and plays back an MP4 file from the recording medium 530 can judge the possibility of playback on the device itself with reference to the management information.

For example, the MP4 file including the management information having the hierarchical configuration of the scheme information boxes of the third embodiment previously described is recorded in the recording medium 530. In other words, the management information of the MP4 file recorded in the recording medium 530 is configured to hierarchically arrange and record the data configuration information where information to be applied to a data process upon a playback process of the encoded data is set by unit of category of the data process. A device that reads and plays back an MP4 file from the recording medium 530 being such an information recording medium can sequentially obtain the hierarchically arranged data configuration information, apply the obtained data configuration information and execute a plurality of data processes in different categories.

Next, a description will be given of a playback process of the MP4 file recorded in the recording medium 530 or an MP4 file received via a communication unit 505. The MP4 file recorded in the recording medium 530 such as a flash memory, an HDD, and a DVD is read via a playback unit 506 to be provided to a data decoding unit 507. Similarly, the MP4 file received via the communication unit 505 is also provided to the data decoding unit 507.

A file analysis unit 521 of the data decoding unit 507 first obtains the management information of the MP4 file received, in other words, the management information recorded in the boxes of the file type box (ftyp), the profile box (uuid (PROF)), and the movie box (moov), which have been previously described with reference to Fig. 1.

As previously described with reference to the first embodiment, the three-dimensional image identification information that indicates whether or not the image data stored in the actual data box (mdat) of the MP4 file include a three-dimensional image is recorded in the profile box (uuid (PROF)). This is the information described with reference to Figs. 2 and 3.

Moreover, as described with reference to the second and third embodiments, the detailed three-dimensional image information, in other words, if the image data stored in the actual data box (mdat) of the MP4 file are three-dimensional image data, detailed information related to the recording and playback format of the three-dimensional image data is recorded in the AV codec box located in the level below the movie box (moov). This is the information described with reference to Figs. 4 to 11. For example, if the MP4 file using the configurations of the second and third embodiments is analyzed, the file analysis unit 521 obtains information by unit of partitioned data by unit of track or sample being the partitioned data of the image data stored in the MP4 file, for example.

The file analysis unit 521 of the data decoding unit 507 analyzes these pieces of management information in the MP4 file to examine whether or not the image data stored in the actual data box (mdat) of the MP4 file include a three-dimensional image and, further, a format thereof if a three dimensional image is included.

The MP4 file, together with the examination information, is provided to a decoding unit 522 afterward. If it is judged from the MP4 file analysis result of the file analysis unit 521 that the stored data of the MP4 file does not comply with formats that the imaging device 500 can play back, the subsequent processes, in other words, the decoding process and the like are not executed. The control over these processes is executed in a control unit 570 in accordance with a program stored in a memory 571. The control unit 570 judges the possibility of playback on the device itself by applying the three-dimensional image management information of the MP4 file, and controls such that the decoding process of the image data in the decoding unit 522 is started after it is judged that playback is possible.

If it is judged based on the MP4 file analysis result of the file analysis unit 521 that the stored data of the MP4 file comply with formats that the imaging device 500 can play back, the decoding unit 522 starts a decoding (decoding) process of the MP4 data. Furthermore, the three-dimensional image format information and the decoding result are provided to a display information generation unit 523.

The display information generation unit 523 executes a decoding process of the image in accordance with each format (refer to Figs. 5 to 7), depending on the three-dimensional image format information, in other words, the format with which the MP4 file stored data comply between the following formats of:
(a) the frame sequential format [FS],
(b) the side by side format [SbS], and
(c) the top and bottom format [T&B].
An image for the left eye (L image) and an image for the right eye (R image) are generated in accordance with each of these formats.
The images for display generated by the data decoding unit 507 are provided to a display unit 550 to display the images.

The display information generation unit 523 is configured of data processing units that execute data processes in various categories, such as a data processing unit that generates an image for the left eye and an image for the right eye, which are applied for three-dimensional image display, for example, a data processing unit that executes a decoding process of encrypted data. The display information generation unit 523 is configured of data processing units that execute a plurality of data processes in different categories, which is executed upon a playback process of image data stored in the MP4 file.

In the process using the MP4 file including the management information having the hierarchically arranged scheme information boxes in the third embodiment previously described, the file analysis unit 521 obtains the hierarchical data configuration information of the management information of the MP4 file, and the decoding unit 522 and the display information generation unit 523 execute a plurality of data processes in different categories by applying information included in the scheme information boxes including the data configuration information by unit of category, which is obtained by the file analysis unit 521.

The control over the processes of the component units is executed by the control unit 570. The control unit 580 executes control over the shooting process data recording process, communication data generation, the data transmission and receipt processes, the data playback process, the display process and the like in accordance with the program previously stored in the memory 571. Upon a data recording or data transmission process, the process control in accordance with the process sequence previously described with reference to the flowchart of Fig. 12 is executed, and upon a data playback process, the process control in accordance with the process sequence previously described with reference to the flowchart of Fig. 13 is executed.

Up to this point the present invention has been described in detail with reference to the specific embodiments. However, it is obvious that those skilled in the art can modify and substitute the embodiments without departing from the gist of the invention. In other words, the present invention has been disclosed as a form of illustration, and should not be interpreted limitedly. In order to judge the gist of the present invention, the claims should be considered.

Moreover, a series of processes described in the specification can be executed by hardware or software, or the composite configuration of both. If the process is executed by software, a program where the process sequences are recorded is installed in a memory in a computer embedded in dedicated hardware to execute the process, or the program is installed in a general-purpose computer that can execute various processes to execute the process. For example, it is possible to previously record the program in a recording medium. In addition to the installation in a computer from a recording medium, it is possible to receive the program via a network such as a LAN (Local Area Network) and the Internet and install the program in a recording medium such as an internal hard disk.

The various processes described in the specification not only are chronologically executed in accordance with the descriptions, but also may be executed in parallel or individually in accordance with the process capability of a device that executes the processes or as necessary. Moreover, the system in the specification indicates a logical aggregate configuration of a plurality of devices, and is not limited to one where a device having each configuration is in the same housing.

### INDUSTRIAL APPLICABILITY

As described above, according to the configuration of an embodiment of the present invention, it is configured to hierarchically arrange and record, in the management information of the MP4 file, information to be applied to various data processes to be executed in a playback process of data stored in an MP4 file, for example, various data processes in different categories such as a three-dimensional image display process and a decoding process of encrypted data. This configuration makes it possible to securely obtain, from the management information of the MP4 file, various information required for each of the data processes in different categories, which are necessary to be executed for the playback of the data stored in the MP4 file, for example, a display process of encrypted three-dimensional image data, and a smooth data playback process becomes possible.

### REFERENCE SIGNS LIST

- 100: MP4 file
- 101: File type box (ftyp)
- 102: Profile box (uuid (prof))
- 103: Movie box (moov)
- 104: Actual data box (mdat)
- 111: Track box (trak)
- 112: Sample description box (stsd)
- 113: AV codec box
- 201: Stereo video flag
- 202: Mixed stereo video flag
- 301: Data area
- 302: Stereo video information box (Stereo Video Description Box)
- 321: Decoded image frame
- 322: Display image frame
- 331: MP4 decoding result image
- 332: Unpacked L image (frame 0)
- 333: Unpacked R image (frame 1)
- 334: L image for display (frame 0)
- 335: R image for display (frame 1)
- 341: MP4 decoding result image
- 342: Unpacked L image (frame 0)
- 343: Unpacked R image (frame 1)
- 344: L image for display (frame 0)
- 345: R image for display (frame 1)
- 400: MP4 file
- 401: AV codec box (avc1)
- 402: AVC data configuration information box [AVCConfigurationBox]
- 405: AV codec box
- 407: AV codec box (encv)
- 410: Three-dimensional image information scheme information box
- 411: Format information box (frma)
- 412: Scheme type box (SchemeTypeBox)
- 413: Detailed scheme information box (SchemeInformationBox)
- 420: Encryption information scheme information box
- 421: Format information box (frma)
- 422: Scheme type box (SchemeTypeBox)
- 423: Detailed scheme information box (SchemeInformationBox)
- 500: Imaging device
- 501: Imaging unit
- 502: Image signal processing unit
- 503: Data encoding unit
- 504: Recording unit
- 505: Communication unit
- 506: Playback unit
- 507: Data decoding unit
- 511: Preprocessing unit
- 512: Encoding unit
- 513: File generation unit
- 521: File analysis unit
- 522: Decoding unit
- 523: Display information generation unit
- 530: Recording medium
- 550: Display unit
- 570: Control unit
- 571: Memory

## Claims

1. An image processing device comprising:
an encoding unit for executing an encoding process of image data; and
a file generation unit for generating an encoded data storage file including encoded data generated by the encoding unit and management information of the encoded data,
wherein the file generation unit generates data configuration information where information to be applied to a data process upon a playback process of the encoded data is set by unit of category of the data process, and generates a file where a plurality of pieces of the data configuration information by unit of category is hierarchically arranged and is recorded in the management information.

2. The image processing device according to claim 1, wherein at least one piece of the data configuration information by unit of category is three-dimensional image management information that makes it possible to distinguish whether or not the stored image data of the file generated by the file generation unit include three-dimensional image data.

3. The image processing device according to claim 1, wherein at least one piece of the data configuration information by unit of category is three-dimensional image management information that makes it possible to distinguish a three-dimensional image recording format of three-dimensional image data included in the stored image data of the file generated by the file generation unit.

4. The image processing device according to claim 3, wherein at least one piece of the data configuration information by unit of category is three-dimensional image management information that makes it possible to distinguish the three-dimensional image recording format with which the three-dimensional image data included in the stored image data of the file generated by the file generation unit comply, among the formats of:
(a) a frame sequential format;
(b) a side by side format; and
(c) a top and bottom format.

5. The image processing device according to any one of claims 2 to 4, wherein
at least one piece of the data configuration information by unit of category is encryption format information of the stored image data of the file generated by the file generation unit, and
the file generation unit generates a file where first data configuration information including the encryption format information and second data configuration information including the three-dimensional image management information are hierarchically arranged and are recorded in the management information.

6. The image processing device according to any one of claims 1 to 5, wherein the file generation unit has a configuration of executing the generation of an MP4 file, and generates a file where the data configuration information is hierarchically arranged and recorded in the level below an AV codec box of the MP4 file.

7. The image processing device according to claim 6, wherein the file generation unit generates a file where a scheme information box including the data configuration information is hierarchically arranged and recorded in the level below the AV codec box of the MP4 file.

8. The image processing device according to claim 7, wherein the file generation unit executes processes of setting and recording the scheme information box by unit of partitioned data by unit of track or sample being partitioned data of image data to be stored in the MP4 file.

9. An image processing device comprising:
a file analysis unit for analyzing an encoded data storage file including encoded data of image data and management information of the encoded data; and
a data processing unit for executing a plurality of data processes in different categories upon a playback process of the image data stored in the file, wherein
the management information of the file has a configuration of hierarchically arranging and recording data configuration information necessary to execute the process by unit of category of the data process,
the file analysis unit obtains the hierarchically arranged data configuration information of the management information of the file, and
the data processing unit applies the data configuration information obtained by the file analysis unit and executes the plurality of data processes in different categories.

10. The image processing device according to claim 9, wherein at least one piece of the data configuration information by unit of category is three-dimensional image management information that makes it possible to distinguish whether the stored image data of the file include three-dimensional image data.

11. The image processing device according to claim 9, wherein at least one piece of the data configuration information by unit of category is three-dimensional image management information that makes it possible to distinguish a three-dimensional image recording format of three-dimensional image data included in the stored image data of the file.

12. The image processing device according to claim 11, wherein at least one piece of the data configuration information by unit of category is three-dimensional image management information that makes it possible to distinguish the three-dimensional image recording format with which the three-dimensional image data included in the stored image data of the file comply, among the formats of:
(a) a frame sequential format;
(b) a side by side format; and
(c) a top and bottom format.

13. The image processing device according to any one of claims 10 to 12, wherein
at least one piece of the data configuration information by unit of category is encryption format information of the stored image data of the file generated by the file generation unit, and
the file analysis unit obtains, from the management information, first data configuration information including the encryption format information and second data configuration information including the three-dimensional image management information.

14. The image processing device according to any one of claims 9 to 13, wherein
the file is an MP4 file, and
the file analysis unit obtains the data configuration information by unit of category of the data process from a scheme information box hierarchically arranged and recorded in the level below an AV codec box of the MP4 file.

15. The image processing device according to claim 14, wherein the file analysis unit obtains the scheme information box by unit of partitioned data by unit of track or sample being partitioned data of the image data stored in the MP4 file.

16. An information recording medium where an MP4 file including encoded data of image data and management information of the encoded data is recorded, wherein
the management information has a configuration of hierarchically arranging and recording data configuration information where information to be applied to a data process upon a playback process of the encoded data is set by unit of category of the data process, and
in a device for reading and playing back an MP4 file, the hierarchically arranged data configuration information is sequentially obtained, and the execution of a plurality of data processes in different categories is enabled by applying the obtained data configuration information.

17. An image processing method to be executed in an image processing device, comprising:
an encoding process step of an encoding unit executing an encoding process of image data; and
a file generation step of a file generation unit generating an encoded data storage file including encoded data generated by the encoding unit and management information of the encoded data,
wherein the file generation step includes the step of generating data configuration information where information to be applied to a data process upon a playback process of the encoded data is set by unit of category of the data process, and generating a file where a plurality of pieces of the data configuration information by unit of category is hierarchically arranged and is recorded in the management information.

18. An image processing method to be executed in an image processing device, comprising:
a file analysis step of a file analysis unit analyzing an encoded data storage file including encoded data of image data and management information of the encoded data; and
a data processing step of a data processing unit executing a plurality of data processes in different categories upon a playback process of the image data stored in the file, wherein
the management information of the file has a configuration of hierarchically arranging and recording data configuration information necessary to execute the process by unit of category of the data process,
the file analysis step includes the step of obtaining hierarchically arranged data configuration information of the management information of the file, and
the data processing step includes the step of applying the data configuration information obtained by the file analysis unit to execute the plurality of data processes in different categories.

19. A program for causing an image processing device to execute an image process, comprising:
an encoding process step of causing an encoding unit to execute an encoding process of image data; and
a file generation step of causing a file generation unit to generate an encoded data storage file including encoded data generated by the encoding unit and management information of the encoded data, wherein
the file generation step includes the step of generating data configuration information where information to be applied to a data process upon a playback process of the encoded data is set by unit of category of the data process, and generating a file where a plurality of pieces of the data configuration information by unit of category is hierarchically arranged and recorded in the management information.

20. A program for causing an image processing device to execute an image process, comprising:
a file analysis step of causing a file analysis unit to analyze an encoded data storage file including encoded data of image data and management information of the encoded data; and
a data processing step of causing a data processing unit to execute a plurality of data processes in different categories upon a playback process of the image data stored in the file, wherein
the management information of the file has a configuration of hierarchically arranging and recording data configuration information necessary to execute the process by unit of category of the data process,
the file analysis step includes the step of obtaining the hierarchically arranged data configuration information of the management information of the file, and
the data processing step includes the step of applying the data configuration information obtained by the file analysis unit to execute the plurality of data processes in different categories.
